# EUROPEAN PATENT APPLICATION

(11) **EP 4 763 293 A1**
(43) Date of publication of application: **24.06.2026**
(21) Application number: 25777172.5
(22) Date of filing: 05.02.2025
(51) Int. Cl.: A63B 71/06

(54) **DEVICE STATE DETECTION METHOD, SWIMMING STATE DETECTION METHOD, AND ELECTRONIC DEVICE**

(30) Priority: 26.03.2024 CN 202410356297
(71) Applicant: HUAWEI TECHNOLOGIES CO., LTD., Shenzhen 518129 (CN)
(72) Inventor: WANG, Sijie, Shenzhen, Guangdong 518129 (CN); XIONG, Xinghan, Shenzhen, Guangdong 518129 (CN); TAO, Weixiao, Shenzhen, Guangdong 518129 (CN); XIE, Lubing, Shenzhen, Guangdong 518129 (CN); JIA, Weibo, Shenzhen, Guangdong 518129 (CN); WANG, Xi, Shenzhen, Guangdong 518129 (CN); PENG, Jiahui, Shenzhen, Guangdong 518129 (CN); ZHOU, Jie, Shenzhen, Guangdong 518129 (CN)
(74) Representative: Pfenning, Meinig & Partner mbB
(86) International application number: PCT/CN2025/075697
(87) International publication number: WO 2025/200778

(57) **Abstract**

This application provides a device status detection method, a swimming status detection method, and an electronic device. The electronic device can obtain capacitance information of a touch panel, and determine, based on the capacitance information, whether a plurality of events are detected, to determine whether the device is in a target state (for example, whether the device is in an immersion state). In a swimming scenario, the electronic device may further determine information such as a swimming duration, a swimming posture, a count of strokes, and a count of laps of a user based on the capacitance information or status information of the device. According to the method provided in this application, a device status is determined more accurately and reliably, and the swimming status information of the user determined in the swimming scenario can better reflect an actual condition of swimming of the user. Data is more authentic, and user experience is better.

## Description

This application claims priority to Chinese Patent Application No. 202410356297.9, filed with the China National Intellectual Property Administration on March 26, 2024 and entitled "DEVICE STATUS DETECTION METHOD, SWIMMING STATUS DETECTION METHOD, AND ELECTRONIC DEVICE", which is incorporated herein by reference in its entirety.

### TECHNICAL FIELD

This application relates to the field of terminal device software, and specifically, to a device status detection method, a swimming status detection method, and an electronic device.

### BACKGROUND

With the development of electronic information technologies, wearable devices such as smart watches, smart bands, and smart glasses are gradually popularized. As an aerobic exercise, swimming is beneficial to cardiovascular health of the human body and is popular among users.

Swimming postures, pace, and stroke counts are effective indicators for evaluating a swimming status of the user. How to improve accuracy and reliability of measuring these swimming indicators by the wearable device is a problem worth considering.

### SUMMARY

This application provides a device status detection method and a swimming status detection method. An electronic device can determine, based on capacitance information detected by using a touch panel of the electronic device, whether the electronic device is in a target state (for example, an immersion state). In a swimming scenario, the capacitance information or status information of the electronic device may also be used to determine some swimming states of a user in a swimming process. Detection results of the device status and the swimming status of the user that are detected by using the capacitance information of the touch panel are more accurate and reliable.

According to a first aspect, a device status detection method is provided. The method is applied to an electronic device, the electronic device includes a touch panel, and the touch panel includes M sites. The method includes: obtaining capacitance information of the touch panel, where the capacitance information includes one or more of the following: capacitance values of the M sites, a relationship between the capacitance values of the M sites and time, or a relationship between the capacitance values of the M sites and positions of the M sites; and determining that the electronic device is in a target state when a first event and a second event are detected, where the target state includes that the electronic device is at least partially immersed in conductive liquid.

The first event includes that capacitance values of at least N of the M sites are greater than or equal to a first threshold, N≤M, and both N and M are positive integers; and the second event includes one or more of the following: a duration of the first event is greater than or equal to a first duration, and capacitance value variations of at least P of the N sites within a second duration are greater than or equal to a second threshold, or the N sites are consecutively distributed, P≤N, and P is a positive integer.

In a possible implementation, the electronic device may detect both the first event and the second event. In this case, the first event and the second event may also be understood as one event, or the first event may include the second event.

In a possible implementation, the target state may include that the electronic device is in an immersion state.

In some scenarios, that the N sites are consecutively distributed may also be understood as that the N sites are not dispersed.

In this technical solution, whether a plurality of events occur is detected by using the capacitance information of the touch panel of the electronic device. When it is determined that the plurality of events occur, it is determined that the device is in the target state. In comparison with a solution in which only a change of the capacitance value of the touch panel is considered, in this technical solution, information such as the relationship between the capacitance value of the touch panel and time, the relationship between the capacitance value and the position of the detection site, a fluctuation of the capacitance value is further considered. The information can more accurately and effectively reflect a state in which the touch panel and a conductive object are in contact, and therefore can more accurately and reliably reflect whether the device is in the target state.

With reference to the first aspect, in some implementations of the first aspect, the method further includes: detecting a third event when the electronic device is in the target state; and when the third event is detected, determining that the electronic device is not in the target state. The third event includes at least one of the following: capacitance values of at least Q of the M sites are less than or equal to a third threshold, Q≤M, and Q is a positive integer; or capacitance value variations of at least R of the N sites are greater than or equal to a fourth threshold within the second duration, R≤N, and R is a positive integer.

In some scenarios, that the capacitance values of the at least Q of the M sites are less than or equal to the third threshold may also be understood as that capacitance values of at least some of a plurality of sites on the touch panel decrease.

Based on the foregoing understanding, because the electronic device being in the target state and the electronic device not being in the target state cannot be true at the same time, to avoid misunderstanding, in some examples, a value of Q may meet Q>M-N, that is, Q+N>M.

In some scenarios, that the capacitance value variations of the at least R of the N sites within the second duration are greater than or equal to the fourth threshold may also be understood as that capacitance values of at least some of a plurality of sites on the touch panel decrease within a preset duration.

In a possible implementation, that the electronic device is not in the target state may include that the electronic device is in an out-of-water state.

In this technical solution, based on determination that the device is in the target state, whether the device is no longer in the target state is further determined based on a decrease status of the capacitance information of the touch panel. In comparison with a manner in which detection data of a sensor like a barometer is used to determine whether the device is no longer in the target state, in this solution, a determining result is more accurate and reliable due to a change of the capacitance information within a time period.

With reference to the first aspect, in some implementations of the first aspect, the method further includes: when an automatic power-off function of the touch panel is enabled, in response to detecting the first event, powering off the touch panel after a third duration, where the third duration is greater than or equal to the first duration.

In this technical solution, when the automatic power-off function of the touch panel is enabled, the electronic device may perform delayed power-off on the touch panel after detecting the first event. In this way, the electronic device can determine whether the device is in the target state based on the capacitance information of the touch panel, and the touch panel after power-off is also conducive to reducing energy consumption of the electronic device.

With reference to the first aspect, in some implementations of the first aspect, the electronic device further includes a barometer and/or an electrocardiogram electrode. The method further includes: when the touch panel is powered off, powering on the touch panel in response to the barometer and/or the electrocardiogram electrode indicating that the electronic device is in the target state.

In this technical solution, the electronic device enters the target state after the touch panel is powered off. To invoke the capacitance information of the touch panel, the electronic device may determine, by using detection data of another sensor, whether the electronic device is in the target state. The electronic device powers on the touch panel when determining that the electronic device is in the target state, to obtain the capacitance information. This improves reliability of detecting a device state by the electronic device, and also helps reduce power consumption of the device.

With reference to the first aspect, in some implementations of the first aspect, the electronic device further includes a sensor. The sensor includes one or more of the following: an accelerometer, a gyroscope, a magnetometer, an electrocardiogram electrode, or a barometer. The method further includes: determining, in response to a capacitance value exception of the M sites and with reference to information of the sensor, whether the electronic device is in the target state.

In some scenarios, the capacitance value exception may also be understood as that the electronic device detects a reference event. The reference event may include one or more of the following: The user presses a display of the electronic device for a long time, an ambient temperature increases, the user powers on the touch panel in the target state, or the like.

For some special events, it is determined based on the capacitance information of the touch panel that there is an error between the device state and an actual device state. In other words, when these events occur, determining the device state based on the capacitance information may cause a misjudgment. In this case, using other sensors of the electronic device helps improve accuracy of device state detection.

According to a second aspect, a swimming status detection method is provided. The method is applied to an electronic device, and the electronic device includes a touch panel. The method includes: obtaining capacitance information of the touch panel; and determining, based on the capacitance information, one or more of the following: a swimming posture, whether a user is in a swimming state, stroke count information, or lap count information. The capacitance information includes one or more of the following: a capacitance value of the touch panel, a relationship between the capacitance value of the touch panel and time, or a distribution of the capacitance value of the touch panel.

In a possible implementation, the stroke count information may include one or more of the following: whether a current stroke count is valid, a total count of strokes in a current lap, a count of valid strokes in a current lap, or the like.

In a possible implementation, the lap count information may include whether the current lap is valid and/or a count of completed laps.

In comparison with a solution in which a sensor like a gyroscope or a magnetometer is used for detection, in this technical solution, information about a swimming status of the user is detected by using the capacitance information of the touch panel of the electronic device, because the capacitance information can more accurately reflect a device state, implementation of the solution helps improve reliability and accuracy of a result of detecting the swimming status of the user by the device.

With reference to the second aspect, in some implementations of the second aspect, determining, based on the capacitance information, the one or more of the following: a swimming posture, whether a user is in a swimming state, and stroke count information or lap count information includes: determining an immersion state frequency and/or an immersion duration of the electronic device based on the capacitance information; and when the immersion state frequency within a preset duration is greater than or equal to a first quantity, and/or when the immersion duration within the preset duration is greater than or equal to a first duration, determining, as a valid stroke count, a stroke count recorded by the electronic device within the preset duration.

In this technical solution, whether a current stroke count of the user is valid is determined based on the immersion state frequency and/or the immersion duration of the device. The immersion state frequency and the immersion duration can directly or indirectly reflect a situation in which the device is in an immersion state, or can reflect a duration in which the user is in an immersion state in a swimming process. This can improve accuracy of determining the valid stroke count by the device to some extent.

With reference to the second aspect, in some implementations of the second aspect, determining the immersion state frequency and/or the immersion duration of the electronic device based on the capacitance information includes: determining a valid site based on the capacitance information, where a ratio of a capacitance value of the valid site to a maximum capacitance value of a site of the touch panel is greater than or equal to a preset value; and determining the immersion state frequency and/or the immersion duration based on a quantity of valid sites.

In this technical solution, the electronic device may determine the immersion state frequency and/or the immersion duration of the device based on capacitance values of a plurality of sites on the touch panel. This provides a specific solution of determining the immersion duration of the device based on the capacitance information.

With reference to the second aspect, in some implementations of the second aspect, determining, based on the capacitance information, the one or more of the following: a swimming posture, whether a user is in a swimming state, stroke count information, or lap count information includes: determining that a current lap is a valid lap when a total immersion duration of a total count of strokes in the current lap is greater than or equal to a second duration, and/or when a count of valid strokes in the current lap is greater than or equal to a second quantity.

In this technical solution, the electronic device may determine, with reference to the count of valid strokes in a single lap of swimming of the user in a swimming process, whether the lap of swimming of the user is a valid lap. This helps implement detection of a swimming status of the user based on the capacitance information.

With reference to the second aspect, in some implementations of the second aspect, determining, based on the capacitance information, the one or more of the following: a swimming posture, whether a user is in a swimming state, stroke count information, or lap count information includes: determining a single-time immersion duration of the electronic device based on the capacitance information; and when the single-time immersion duration is greater than or equal to a third duration, determining that the swimming posture of the user is breaststroke.

In some scenarios, the single-time immersion duration may also be understood as time from a start of an immersion state to an end of the immersion state of an electronic device worn by the user.

With reference to the second aspect, in some implementations of the second aspect, the electronic device further includes an accelerometer and a gyroscope. Determining, based on the capacitance information, the one or more of the following: a swimming posture, whether a user is in a swimming state, stroke count information, or lap count information includes: determining the swimming posture of the user with reference to information about the accelerometer, information about the gyroscope, and the capacitance information.

In a possible implementation, the information about the accelerometer, the information about the gyroscope, and the capacitance information may be used to train a swimming posture identification model. Based on the swimming posture identification model, the electronic device may identify a swimming posture of the user.

In this technical solution, the electronic device may determine the swimming posture of the user with reference to the capacitance information of the touch panel. By introducing monitoring data in a new swimming process, accuracy of determining the swimming posture by the electronic device is improved.

With reference to the second aspect, in some implementations of the second aspect, the electronic device further includes a barometer. Determining, based on the capacitance information, the one or more of the following: a swimming posture, whether a user is in a swimming state, stroke count information, or lap count information includes: determining, with reference to information about the barometer and the capacitance information, whether the user is in the swimming state.

With reference to the second aspect, in some implementations of the second aspect, determining, based on the information about the barometer and the capacitance information, whether the user is in the swimming state includes: determining that the user is in the swimming state when the barometer indicates that the electronic device is in an immersion state, and the capacitance information indicates that a count of strokes with a valid swimming posture in M valid strokes is greater than or equal to N, where N≤M, and N and M are positive integers; or determining that the user is in the swimming state when the barometer indicates that the electronic device is in an out-of-water state, and the capacitance information indicates that the immersion duration of the electronic device is greater than or equal to a fourth duration, and that a count of strokes with a valid swimming posture in latest P strokes is greater than or equal to Q, where Q≤P, and Q and P are positive integers.

With reference to the second aspect, in some implementations of the second aspect, determining, with reference to the information about the barometer and the capacitance information, whether the user is in the swimming state includes: determining that the user is in the immersion state without swimming when the barometer indicates that the electronic device is in the immersion state, and the capacitance information indicates that the count of strokes with the valid swimming posture in the M valid strokes is less than N, where N≤M, and N and M are positive integers.

With reference to the second aspect, in some implementations of the second aspect, determining, with reference to the information about the barometer and the capacitance information, whether the user is in the swimming state includes: determining that the user is in the out-of-water state when the barometer indicates that the electronic device is in the out-of-water state, and the touch panel indicates that the immersion duration of the electronic device is less than the fourth duration and/or that the count of strokes with the valid swimming posture in the latest P strokes is less than Q, where Q≤P, and Q and P are positive integers.

In the foregoing solution, the electronic device may determine, with reference to the barometer information and the capacitance information, whether the user is in the swimming state. Compared with a solution in which determining is performed based on only the information about the barometer, this solution helps reduce a risk of determining cannot be performed because the barometer fails, and helps improve reliability and accuracy of determining whether the user is in the swimming state or a rest state.

According to a third aspect, a swimming status detection method is provided, applied to an electronic device, where the electronic device includes a touch panel, and the method includes: displaying prompt information in response to a swimming start operation, where the prompt information indicates to enable the touch panel to detect a swimming status; and obtaining capacitance information of the touch panel in response to a confirmation operation, where the capacitance information includes one or more of the following: a capacitance value of the touch panel, a relationship between a capacitance value and time, or a distribution of the capacitance value of the touch panel.

In this technical solution, the electronic device may prompt the user to detect a swimming status by using the touch panel, and enable a swimming status detection function of the touch panel based on a selection of the user. This helps obtain more data to reflect a swimming status of the user, thereby improving reliability and accuracy of a swimming status data detection result of the user, and improving user experience.

With reference to the third aspect, in some implementations of the third aspect, the electronic device further includes a barometer. The method further includes: displaying prompt information in response to a case in which detection data of the barometer indicates that the electronic device is in an out-of-water state and the capacitance information indicates that the user is in a swimming state, where the prompt information indicates that the barometer is in an invalid state.

In a possible implementation, in response to a confirmation operation of the user, the electronic device may use the touch panel to detect a swimming status of the user.

In this technical solution, the electronic device may reflect a working status of the barometer of the device with reference to the capacitance information, to adaptively adjust a function of the electronic device in a timely manner, to obtain more accurate and effective data and information, and improve user experience.

With reference to the third aspect, in some implementations of the third aspect, the electronic device further includes a barometer. The method further includes: powering off the touch panel of the electronic device in response to a case in which detection data of the barometer indicates that the electronic device is in an out-of-water state, and the capacitance information indicates that the user is in a rest state.

In this technical solution, the electronic device can determine, based on the capacitance information, that the user is not in the swimming state, and disable, in a timely manner, the function of detecting the swimming status of the user by using the touch panel. This helps reduce energy consumption of the electronic device.

With reference to the third aspect, in some implementations of the third aspect, the method further includes: updating, in response to the capacitance information indicating that an immersion duration of a current swimming lap of the user is greater than or equal to a preset duration and/or a count of valid strokes in the current swimming lap of the user is greater than or equal to a preset count, a count of swimming laps currently completed by the user.

In this technical solution, the electronic device may pre-update data of the count of swimming laps of the user based on the capacitance information of the touch panel, which helps improve user experience.

According to a fourth aspect, a swimming status detection method is provided. The method is applied to an electronic device, and the electronic device includes a touch panel. The method includes: obtaining device status information, where the device status information is determined based on capacitance information of the touch panel; and determining swimming status information of a user based on the device status information. The capacitance information includes one or more of the following: a capacitance value of the touch panel, a relationship between the capacitance value of the touch panel and time, or a distribution of the capacitance value of the touch panel. The device status information includes one or more of the following: an immersion state duration of the device, an out-of-water state duration of the device, an immersion state frequency of the device, or an out-of-water state frequency of the device. The swimming status information includes one or more of the following: a swimming posture, whether the user is in a swimming state, stroke count information, or lap count information.

With reference to the fourth aspect, in some implementations of the fourth aspect, the method further includes: obtaining the capacitance information in response to a swimming start operation; and determining, based on the capacitance information, that the device is in the immersion state.

In a possible implementation, the electronic device may determine, according to the method in the first aspect and any possible implementation of the first aspect, whether the device is in the immersion state or the out-of-water state. On this basis, the electronic device may determine a swimming status of the user according to the method in the second aspect and any possible implementation of the second aspect.

In this technical solution, the electronic device may determine the swimming status of the user based on the device status of the user, and establish an association between the device status and an activity status of the user based on the capacitance information of the electronic device. This enriches functions of the electronic device and improves user experience.

For detailed descriptions and explanations of beneficial effects of the following technical solutions, refer to related content of the technical solutions in the first aspect to the fourth aspect. For brevity, details are not repeated below.

According to a fifth aspect, a device status detection apparatus is provided. The apparatus includes a touch panel, and the touch panel includes M sites. The apparatus further includes an obtaining module and a processing module. The obtaining module is configured to obtain capacitance information of the touch panel. The capacitance information includes one or more of the following: capacitance values of the M sites, a relationship between the capacitance values of the M sites and time, or a relationship between the capacitance values of the M sites and positions of the M sites. The processing module is configured to determine that the apparatus is in a target state when a first event and a second event are detected, where the target state includes that the apparatus is at least partially immersed in conductive liquid.

The first event includes that capacitance values of at least N of the M sites are greater than or equal to a first threshold, N≤M, and both N and M are positive integers; and the second event includes one or more of the following: a duration of the first event is greater than or equal to a first duration, and capacitance value variations of at least P of the N sites within a second duration are greater than or equal to a second threshold, or the N sites are consecutively distributed, P≤N, and P is a positive integer.

With reference to the fifth aspect, in some implementations of the fifth aspect, the processing module is further configured to: detect a third event when the apparatus is in the target state; and when the third event is detected, determine that the apparatus is not in the target state. The third event includes at least one of the following: capacitance values of at least Q of M sites are less than or equal to a third threshold, Q≤M, and Q is a positive integer; or capacitance value variations of at least R of N sites within the second duration are greater than or equal to a fourth threshold, R≤N, and R is a positive integer.

With reference to the fifth aspect, in some implementations of the fifth aspect, the apparatus further includes a barometer and/or an electrocardiogram electrode. The processing module is further configured to: when the touch panel is powered off, power on the touch panel in response to the barometer and/or the electrocardiogram electrode indicating that the apparatus is in the target state.

With reference to the fifth aspect, in some implementations of the fifth aspect, the apparatus further includes a sensor, where the sensor includes one or more of the following: an accelerometer, a gyroscope, a magnetometer, an electrocardiogram electrode, or a barometer, and the processing module is further configured to: in response to a capacitance value exception of the M sites, determine, with reference to information about the sensor, whether the apparatus is in the target state.

According to a sixth aspect, a swimming status detection apparatus is provided. The apparatus includes a touch panel. The apparatus further includes an obtaining module and a processing module. The obtaining module is configured to obtain capacitance information of the touch panel. The processing module is configured to determine, based on the capacitance information, one or more of the following: a swimming posture, whether a user is in a swimming state, stroke count information, or lap count information. The capacitance information includes one or more of the following: a capacitance value of the touch panel, a relationship between the capacitance value of the touch panel and time, or a distribution of the capacitance value of the touch panel.

With reference to the sixth aspect, in some implementations of the sixth aspect, the processing module is specifically configured to: determine an immersion state frequency and/or an immersion duration of the apparatus based on the capacitance information; and determine, when the immersion state frequency within a preset duration is greater than or equal to a first quantity and/or the immersion duration within the preset duration is greater than or equal to a first duration, as a valid stroke count, a stroke count recorded by the apparatus within the preset duration.

With reference to the sixth aspect, in some implementations of the sixth aspect, the processing module is specifically configured to: determine a valid site based on the capacitance information, where a ratio of a capacitance value of the valid site to a maximum capacitance value of a site of the touch panel is greater than or equal to a preset value; and determine the immersion state frequency and/or the immersion duration based on a quantity of valid sites.

With reference to the sixth aspect, in some implementations of the sixth aspect, the processing module is specifically configured to: determine that a current lap is a valid lap when a total immersion duration of a total count of strokes in the current lap is greater than or equal to a second duration, and/or when a count of valid strokes in the current lap is greater than or equal to a second quantity.

With reference to the sixth aspect, in some implementations of the sixth aspect, the processing module is specifically configured to: determine a single-time immersion duration of the apparatus based on the capacitance information; and when the single-time immersion duration is greater than or equal to a third duration, determine that the swimming posture of the user is breaststroke.

With reference to the sixth aspect, in some implementations of the sixth aspect, the apparatus further includes an accelerometer and a gyroscope. The processing module is specifically configured to determine the swimming posture of the user with reference to information about the accelerometer, information about the gyroscope, and the capacitance information.

With reference to the sixth aspect, in some implementations of the sixth aspect, the apparatus further includes a barometer. The processing module is specifically configured to determine, with reference to information about the barometer and the capacitance information, whether the user is in the swimming state.

With reference to the sixth aspect, in some implementations of the sixth aspect, the processing module is specifically configured to: determine that the user is in the swimming state when the barometer indicates that the apparatus is in an immersion state, and the capacitance information indicates that a count of strokes with a valid swimming posture in M valid strokes is greater than or equal to N, where N≤M, and N and M are positive integers; or determine that the user is in the swimming state when the barometer indicates that the apparatus is in an out-of-water state, and the capacitance information indicates that the immersion duration of the apparatus is greater than or equal to a fourth duration and that a count of strokes with a valid swimming posture in latest P stroks is greater than or equal to Q, where Q≤P, and Q and P are positive integers.

With reference to the sixth aspect, in some implementations of the sixth aspect, the processing module is specifically configured to: determine that the user is in the immersion state without swimming when the barometer indicates that the apparatus is in the immersion state, and the capacitance information indicates that the count of strokes with the valid swimming posture in the M valid strokes is less than N, where N≤M, and N and M are positive integers.

With reference to the sixth aspect, in some implementations of the sixth aspect, the processing module is specifically configured to: determine that the user is in the out-of-water state when the barometer indicates that the apparatus is in the out-of-water state, and the touch panel indicates that the immersion duration of the apparatus is less than the fourth duration and/or that the count of strokes with the valid swimming posture in the latest P strokes is less than Q, where Q≤P, and Q and P are positive integers.

According to a seventh aspect, a swimming status detection apparatus is provided. The apparatus includes a touch panel, and the apparatus further includes a processing module. The processing module is configured to: display prompt information in response to a swimming start operation, where the prompt information indicates to enable the touch panel to detect a swimming status; and obtain capacitance information of the touch panel in response to a confirmation operation. The capacitance information includes one or more of the following: a capacitance value of the touch panel, a relationship between the capacitance value of the touch panel and time, or a distribution of the capacitance value of the touch panel.

With reference to the seventh aspect, in some implementations of the seventh aspect, the apparatus further includes a barometer, and the processing module is further configured to: display prompt information in response to a case in which detection data of the barometer indicates that the apparatus is in an out-of-water state and the capacitance information indicates that the user is in a swimming state, where the prompt information indicates that the barometer is in an invalid state.

With reference to the seventh aspect, in some implementations of the seventh aspect, the apparatus further includes a barometer, and the processing module is further configured to power off the touch panel of the apparatus in response to a case in which detection data of the barometer indicates that the apparatus is in an out-of-water state, and the capacitance information indicates that the user is in a rest state.

With reference to the seventh aspect, in some implementations of the seventh aspect, the processing module is further configured to: update, in response to the capacitance information indicating that an immersion duration of a current swimming lap of the user is greater than or equal to a preset duration and/or a count of valid strokes in the current swimming lap of the user is greater than or equal to a preset count, a count of swimming laps currently completed by the user.

According to an eighth aspect, a swimming status detection apparatus is provided, where the apparatus includes a touch panel, the apparatus further includes a processing module, and the processing module is configured to: obtain device status information, where the device status information is determined based on capacitance information of the touch panel; and determine swimming status information of a user based on the device status information. The capacitance information includes one or more of the following: a capacitance value of the touch panel, a relationship between the capacitance value of the touch panel and time, or a distribution of the capacitance value of the touch panel. The device status information includes one or more of the following: an immersion state duration of the device, an out-of-water state duration of the device, an immersion state frequency of the device, or an out-of-water state frequency of the device. The swimming status information includes one or more of the following: a swimming posture, whether the user is in a swimming state, stroke count information, or lap count information.

With reference to the eighth aspect, in some implementations of the eighth aspect, the processing module is further configured to: obtain the capacitance information in response to a swimming start operation; and determine, based on the capacitance information, that the device is in the immersion state.

According to a ninth aspect, an electronic device is provided, where the electronic device includes a touch panel, the touch panel includes M sites, and the electronic device further includes a processor and a memory. The memory is configured to store program instructions, and the processor is configured to: obtain capacitance information of the touch panel, where the capacitance information includes one or more of the following: capacitance values of M sites, and a relationship between the capacitance values of M sites and time or a relationship between the capacitance values of M sites and positions of M sites; and determine that the electronic device is in a target state when a first event and a second event are detected, where the target state includes that the electronic device is at least partially immersed in conductive liquid.

The first event includes that capacitance values of at least N of the M sites are greater than or equal to a first threshold, N≤M, and both N and M are positive integers; and the second event includes one or more of the following: a duration of the first event is greater than or equal to a first duration, and capacitance value variations of at least P of the N sites within a second duration are greater than or equal to a second threshold, or the N sites are consecutively distributed, P≤N, and P is a positive integer.

With reference to the ninth aspect, in some implementations of the ninth aspect, the processor is further configured to: detect a third event when the electronic device is in the target state; and when the third event is detected, determine that the electronic device is not in the target state. The third event includes at least one of the following: capacitance values of at least Q of the M sites are less than or equal to a third threshold, Q≤M, and Q is a positive integer; or capacitance value variations of at least R of the N sites are greater than or equal to a fourth threshold within the second duration, R≤N, and R is a positive integer.

With reference to the ninth aspect, in some implementations of the ninth aspect, the electronic device further includes a barometer and/or an electrocardiogram electrode. The processor is further configured to: when the touch panel is powered off, power on the touch panel in response to the barometer and/or the electrocardiogram electrode indicating that the electronic device is in the target state.

With reference to the ninth aspect, in some implementations of the ninth aspect, the electronic device further includes a sensor. The sensor includes one or more of the following: an accelerometer, a gyroscope, a magnetometer, an electrocardiogram electrode, or a barometer. The processor is further configured to: determine, in response to a capacitance value exception of the M sites and with reference to information of the sensor, whether the electronic device is in the target state.

According to a tenth aspect, an electronic device is provided. The electronic device includes a touch panel. The electronic device further includes a processor and a memory. The memory is configured to store program instructions. The processor is configured to: obtain capacitance information of the touch panel; and determine, based on the capacitance information, one or more of the following: a swimming posture, whether a user is in a swimming state, stroke count information, or lap count information. The capacitance information includes one or more of the following: a capacitance value of the touch panel, a relationship between the capacitance value of the touch panel and time, or a distribution of the capacitance value of the touch panel.

With reference to the tenth aspect, in some implementations of the tenth aspect, the processor is specifically configured to: determine an immersion state frequency and/or an immersion duration of the electronic device based on the capacitance information; and determine, when the immersion state frequency within a preset duration is greater than or equal to a first quantity and/or the immersion duration within the preset duration is greater than or equal to a first duration, as a valid stroke count, a stroke count recorded by the electronic device within the preset duration.

With reference to the tenth aspect, in some implementations of the tenth aspect, the processor is specifically configured to: determine a valid site based on the capacitance information, where a ratio of a capacitance value of the valid site to a maximum capacitance value of a site of the touch panel is greater than or equal to a preset value; and determine the immersion state frequency and/or the immersion duration based on a quantity of valid sites.

With reference to the tenth aspect, in some implementations of the tenth aspect, the processor is specifically configured to: determine that a current lap is a valid lap when a total immersion duration of a total count of strokes in the current lap is greater than or equal to a second duration, and/or when a count of valid strokes in the current lap is greater than or equal to a second quantity.

With reference to the tenth aspect, in some implementations of the tenth aspect, the processor is specifically configured to: determine a single-time immersion duration of the electronic device based on the capacitance information; and when the single-time immersion duration is greater than or equal to a third duration, determining that the swimming posture of the user is breaststroke.

With reference to the tenth aspect, in some implementations of the tenth aspect, the electronic device further includes an accelerometer and a gyroscope, and the processor is specifically configured to determine the swimming posture of the user with reference to information about the accelerometer, information about the gyroscope, and the capacitance information.

With reference to the tenth aspect, in some implementations of the tenth aspect, the electronic device further includes a barometer, and the processor is specifically configured to determine, with reference to information about the barometer and capacitance information, whether the user is in the swimming state.

With reference to the tenth aspect, in some implementations of the tenth aspect, the processor is specifically configured to: determine that the user is in the swimming state when the barometer indicates that the electronic device is in an immersion state, and the capacitance information indicates that a count of strokes with a valid swimming posture in M valid strokes is greater than or equal to N, where N≤M, and N and M are positive integers; or determine that the user is in the swimming state when the barometer indicates that the electronic device is in an out-of-water state, and the capacitance information indicates that the immersion duration of the electronic device is greater than or equal to a fourth duration and that a count of strokes with a valid swimming posture in latest P strokes is greater than or equal to Q, where Q≤P, and Q and P are positive integers.

With reference to the tenth aspect, in some implementations of the tenth aspect, the processor is specifically configured to: determine that the user is in the immersion state without swimming when the barometer indicates that the electronic device is in the immersion state, and the capacitance information indicates that the count of strokes with the valid swimming posture in the M valid strokes is less than N, where N≤M, and N and M are positive integers.

With reference to the tenth aspect, in some implementations of the tenth aspect, the processor is specifically configured to: determine that the user is in the out-of-water state when the barometer indicates that the electronic device is in the out-of-water state, and the touch panel indicates that the immersion duration of the electronic device is less than the fourth duration and/or that the count of strokes with the valid swimming posture in the latest P strokes is less than Q, where Q≤P, and Q and P are positive integers.

According to an eleventh aspect, an electronic device is provided, where the electronic device includes a touch panel, the electronic device further includes a processor and a memory, the memory is configured to store program instructions, and the processor is configured to: display prompt information in response to a swimming start operation, where the prompt information indicates to enable the touch panel to detect a swimming status; and obtain capacitance information of the touch panel in response to a confirmation operation. The capacitance information includes one or more of the following: a capacitance value of the touch panel, a relationship between the capacitance value of the touch panel and time, or a distribution of the capacitance value of the touch panel.

With reference to the eleventh aspect, in some implementations of the eleventh aspect, the electronic device further includes a barometer, and the processor is further configured to: display prompt information in response to a case in which detection data of the barometer indicates that the electronic device is in an out-of-water state and the capacitance information indicates that the user is in a swimming state, where the prompt information indicates that the barometer is in an invalid state.

With reference to the eleventh aspect, in some implementations of the eleventh aspect, the electronic device further includes a barometer, and the processor is further configured to power off the touch panel of the electronic device in response to a case in which detection data of the barometer indicates that the electronic device is in an out-of-water state, and the capacitance information indicates that the user is in a rest state.

With reference to the eleventh aspect, in some implementations of the eleventh aspect, the processor is further configured to: update, in response to the capacitance information indicating that an immersion duration of a current swimming lap of the user is greater than or equal to a preset duration and/or a count of valid strokes in the current swimming lap of the user is greater than or equal to a preset count, a count of swimming laps currently completed by the user.

According to a twelfth aspect, an electronic device is provided. The electronic device includes a touch panel. The electronic device further includes a processor and a memory. The memory is configured to store program instructions. The processor is configured to: obtain device status information, where the device status information is determined based on capacitance information of the touch panel; and determine swimming status information of a user based on the device status information. The capacitance information includes one or more of the following: a capacitance value of the touch panel, a relationship between the capacitance value of the touch panel and time, or a distribution of the capacitance value of the touch panel. The device status information includes one or more of the following: an immersion state duration of the device, an out-of-water state duration of the device, an immersion state frequency of the device, or an out-of-water state frequency of the device. The swimming status information includes one or more of the following: a swimming posture, whether the user is in a swimming state, stroke count information, or lap count information.

With reference to the twelfth aspect, in some implementations of the twelfth aspect, the processor is further configured to: obtain the capacitance information in response to a swimming start operation; and determine, based on the capacitance information, that the device is in the immersion state.

According to a thirteenth aspect, a computer program product is provided. The computer program product includes computer program code. When the computer program code is run on a computer, the method in the first aspect or any possible implementation of the first aspect is performed, or the method in the second aspect or any possible implementation of the second aspect is performed, or the method in the third aspect or any possible implementation of the third aspect is performed, or the method in the fourth aspect or any possible implementation of the fourth aspect is performed.

According to a fourteenth aspect, a computer-readable storage medium is provided. The computer-readable storage medium stores computer program code. When the computer program code is run on a computer, the method in the first aspect or any possible implementation of the first aspect is performed, or the method in the second aspect or any possible implementation of the second aspect is performed, or the method in the third aspect or any possible implementation of the third aspect is performed, or the method in the fourth aspect or any possible implementation of the fourth aspect is performed.

According to a fifteenth aspect, a chip is provided. The chip includes a processor, configured to read instructions stored in a memory. When the processor executes the instructions, the chip is enabled to implement the method in the first aspect and any possible implementation of the first aspect, or the chip is enabled to implement the method in the second aspect and any possible implementation of the second aspect, or the chip is enabled to implement the method in the third aspect and any possible implementation of the third aspect, or the chip is enabled to implement the method in the fourth aspect and any possible implementation of the fourth aspect.

### BRIEF DESCRIPTION OF DRAWINGS

FIG. 1 is a diagram of a hardware architecture of an electronic device according to an embodiment of this application;
FIG. 2 is a diagram of a structure of a display of an electronic device according to an embodiment of this application;
FIG. 3 is a three-dimensional view of a touch panel according to an embodiment of this application;
FIG. 4 is a stacked view of a touch panel according to an embodiment of this application;
FIG. 5 is a diagram of a device status detection method according to an embodiment of this application;
FIG. 6 is a diagram of another method for detecting that a device is in a target state according to an embodiment of this application;
FIG. 7 is a curve diagram of a change of a capacitance value of a capacitance value detection site of a touch panel according to an embodiment of this application;
FIG. 8 is a diagram of still another method for detecting that a device is in a target state according to an embodiment of this application;
FIG. 9 is another curve diagram of a change of a capacitance value of a capacitance value detection site of a touch panel according to an embodiment of this application;
FIG. 10 is a diagram of still another method for detecting that a device is in a target state according to an embodiment of this application;
FIG. 11 is a diagram of a manner in which a device enters a target state according to an embodiment of this application;
FIG. 12 is a diagram of a distribution of a capacitance value of a touch panel of the device in different manners in FIG. 11;
FIG. 13 is a diagram of a method for determining a manner in which a device enters a target state according to an embodiment of this application;
FIG. 14 is a diagram of a method for detecting that a device is not in a target state according to an embodiment of this application;
FIG. 15 is a diagram of a scenario of detecting whether a device is in a target state according to an embodiment of this application;
FIG. 16 is a diagram of a device status detection method in the scenario shown in FIG. 15;
FIG. 17 is another diagram of a scenario of detecting whether a device is in a target state according to an embodiment of this application;
FIG. 18 is a diagram of a device status detection method in the scenario shown in FIG. 17;
FIG. 19 is a diagram of still another device status detection method according to an embodiment of this application;
FIG. 20 is a diagram of a swimming status detection method according to an embodiment of this application;
FIG. 21 is a diagram of a method for determining stroke count information in a swimming process according to an embodiment of this application;
FIG. 22 is a diagram of a statistical result of a quantity of valid capacitance value detection sites within a specific duration according to an embodiment of this application;
FIG. 23 is a diagram of a method for determining lap count information in a swimming process according to an embodiment of this application;
FIG. 24 is a diagram of another method for determining lap count information in a swimming process according to an embodiment of this application;
FIG. 25 is a diagram of a swimming posture determining method according to an embodiment of this application;
FIG. 26 is a diagram of a method for determining whether a user is in a swimming state according to an embodiment of this application;
FIG. 27 is a diagram of another method for determining whether a user is in a swimming state according to an embodiment of this application;
FIG. 28 is a diagram of another swimming status detection method according to an embodiment of this application;
FIG. 29 to FIG. 35 are diagrams of graphical user interfaces of an electronic device according to an embodiment of this application;
FIG. 36 is a diagram of a device status detection apparatus according to an embodiment of this application;
FIG. 37 is a diagram of a swimming status detection apparatus according to an embodiment of this application; and
FIG. 38 is a diagram of an electronic device according to an embodiment of this application.

### DESCRIPTION OF EMBODIMENTS

The following describes technical solutions of this application with reference to accompanying drawings.

The following describes embodiments of this application in detail. Examples of embodiments of this application are shown in the accompanying drawings. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

The terms "first", "second", "third", "fourth", and the like (if any) in this application are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein.

Unless otherwise defined, technical terms or scientific data used in this application should have a general meaning understood by a person of ordinary skill in the technical field of this application. In descriptions of this application, it should be understood that orientations or position relationships indicated by terms such as "center", "longitudinal", "lateral", "up", "down", "front", "back", "left", "right", "vertical", "horizontal", "top", "bottom", "inside", and "outside" are orientations or position relationships that are shown based on the accompanying drawings, and are merely intended to facilitate the descriptions of this application and simplify the descriptions, but are not intended to indicate or imply that an indicated apparatus or element needs to have a specific orientation or needs to be constructed and operated in a specific orientation, and therefore cannot be understood as a limitation on this application.

To make technical problems resolve, technical solutions used, and technical effect achieved in this application clearer, the following further describes the technical solutions in embodiments of this application in detail with reference to the accompanying drawings. It is clear that the described embodiments are merely some rather than all of embodiments of this application.

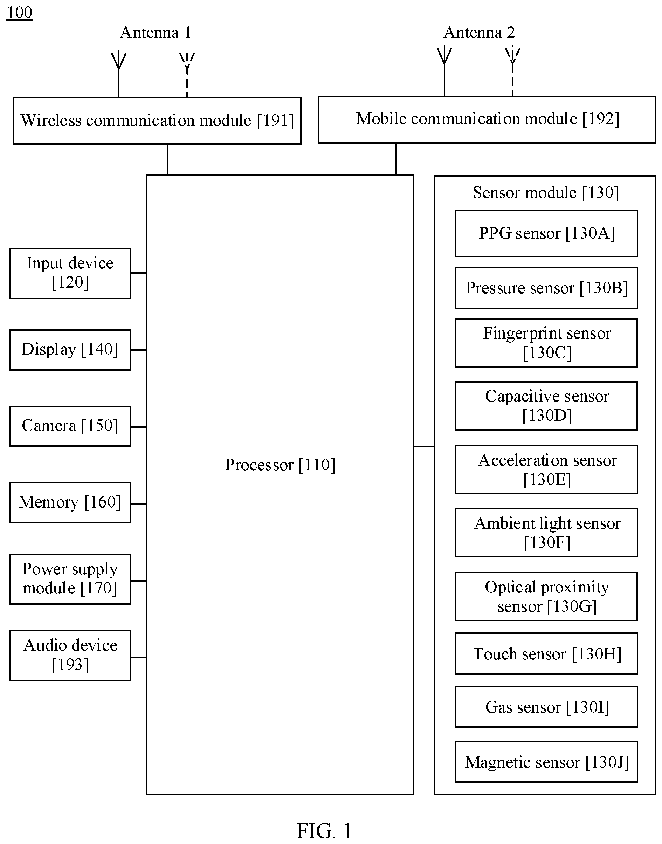

FIG. 1 is a functional block diagram of a wearable device 100 according to an embodiment of this application. For example, the wearable device 100 may be a smart watch, a smart band, or the like. As shown in FIG. 1, for example, the wearable device 100 may include a processor 110, an input device 120, a sensor module 130, a memory 160, and a power supply module 170. It may be understood that the components shown in FIG. 1 do not constitute a specific limitation on the wearable device 100. The wearable device 100 may further include more or fewer components than those shown in the figure, or a combination of a part of the components, or splits from a part of the components, or an arrangement of different components.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the wearable device 100. The controller may generate an operation control signal based on an instruction operation code and a time sequence signal, to complete control of instruction reading and instruction execution. In some other embodiments, a memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory, thereby avoiding repeated access and reducing waiting time of the processor 110, thereby improving efficiency of the wearable device 100.

The input device 120 is configured to provide user input, and may be a mechanical device. A user touches the input device 120, so that the input device 120 rotates, translates, or tilts to implement user input, to implement functions or operations such as starting (for example, powering on or off), determining or adjusting a signal (for example, adjusting a volume) of the wearable device 100.

The sensor module 130 may include one or more sensors, for example, may include a PPG sensor 130A, a pressure sensor 130B, a fingerprint sensor 130C, a capacitive sensor 130D, an acceleration sensor 130E, an ambient light sensor 130F, an optical proximity sensor 130G, and a touch sensor 130H. It should be understood that FIG. 1 merely lists several examples of sensors. In actual application, the wearable device 100 may further include more or fewer sensors, or replace the listed sensors with other sensors with a same or similar function. This is not limited in this embodiment of this application.

In some embodiments, the sensor module 130 may detect a user input from the input device 120, respond to the user input, and implement functions or operations such as starting, determining, and adjusting a signal.

The PPG sensor 130A may be configured to detect a heart rate, namely, a quantity of heartbeats per unit time. In some embodiments, the PPG sensor 130A may include an optical sending unit and an optical receiving unit. The optical sending unit may irradiate a light beam into a human body (for example, a blood vessel), the light beam is reflected/refracted in a human body, and reflected/refracted light is received by the optical receiving unit, to obtain an optical signal. Because transmittance of blood changes in a fluctuation process, the emitted/refracted light changes, and an optical signal detected by the PPG sensor 130A also changes. The PPG sensor 130A may convert the optical signal into an electrical signal, to determine a heart rate corresponding to the electrical signal. In this embodiment of this application, the PPG sensor 130A may be disposed in the input device 120 or disposed in a housing 180, and a PPG detection function may be implemented by using an optical signal detected by the PPG sensor 130A.

The pressure sensor 130B may be configured to detect a pressure value between a human body and the wearable device 100. The pressure sensor 130B is configured to sense a pressure signal, and may convert the pressure signal into an electrical signal. There are many types of pressure sensors 130B, such as a resistive pressure sensor, an inductive pressure sensor, and a capacitive pressure sensor. This is not limited in this embodiment of this application. In this embodiment of this application, a plurality of pressure sensors 130B may be disposed on the input device 120, and rotation of the input device 120 is identified by using a signal difference between adjacent pressure sensors 130B in the plurality of pressure sensors 130B.

The capacitive sensor 130D may be configured to detect capacitance between two electrodes, to implement a specific function.

In some embodiments, the capacitive sensor 130D may be configured to detect capacitance between a human body and the wearable device 100. The capacitance may reflect whether the human body is in good contact with the wearable device, and may be applied to electrocardiography (Electrocardiography, ECG) detection. The human body may be used as an electrode. When the capacitive sensor 130D is disposed on an electrode of the wearable device, the capacitive sensor 130D may detect capacitance between the human body and the electrode. When the capacitance detected by the capacitive sensor 130D is excessively large or excessively small, it indicates that the human body is in poor contact with the electrode. When the capacitance detected by the capacitive sensor 130D is moderate, it indicates that the human body is in good contact with the electrode. Whether the human body is in good contact with the electrode affects detection of an electrical signal by the electrode, and further affects generation of the ECG. Therefore, when the wearable device 100 generates the ECG, refer to the capacitance detected by the capacitive sensor 130D.

In some examples, the wearable device 100 may be provided with an electrocardiogram (ECG) electrode. The electrocardiogram electrode may be configured to implement functions such as detecting an electrocardiogram and a heart rate of a user.

The acceleration sensor 130E, which may also be referred to as an accelerometer (accelerometer), is configured to detect acceleration changes of the device in a plurality of directions in three-dimensional space.

The magnetic sensor 130J, which may also be referred to as a magnetometer (magnetometer), is configured to detect intensity and a direction of a geomagnetic field in an ambient environment of the device, and can implement functions such as an electronic compass and positioning.

In some examples, the wearable device 100 may further include sensors such as a gyroscope (gyroscope) and a barometer (barometer). The gyroscope may be configured to determine rotation and tilt angles of the device in three-dimensional space. The barometer may be configured to measure pressure of an ambient environment (for example, atmosphere or water) around the device.

The memory 160 may be configured to store computer-executable program code. The executable program code includes instructions. The processor 110 runs the instructions stored in the memory, to implement various function applications of the wearable device 100 and data processing. The memory 160 may include a high-speed random access memory, and may further include a non-volatile memory, for example, at least one magnetic disk storage device, a flash memory device, or a universal flash storage (universal flash storage, UFS). This is not limited in this embodiment of this application.

The power supply module 170 may supply power to components such as the processor 110 and the sensor module 130 in the wearable device 100. In some embodiments, the power supply module 170 may be a battery or another portable electrical element. In some other embodiments, the wearable device 100 may be further connected to a charging device (for example, in a wireless or wired manner), and the power supply module 170 may receive electric energy input by the charging device, to store electricity by using a battery.

In some embodiments, still refer to FIG. 1. The wearable device 100 further includes a display 140. The display 140 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

In some embodiments, a touch sensor may be disposed in the display 140 to form a touchscreen. This is not limited in embodiments of this application. It may be understood that, in some embodiments, the wearable device 100 may include the display 140, or may not include the display 140. For example, when the wearable device 100 is a band, the wearable device 100 may include a display or may not include a display. When the wearable device 100 is a watch, the wearable device 100 may include a display.

In addition, the wearable device 100 may have a wireless communication function. In some embodiments, still refer to FIG. 1. The wearable device 100 may further include a wireless communication module 191, a mobile communication module 192, one or more antennas 1, and one or more antennas 2. The wearable device 100 may implement a wireless communication function by using the antenna 1, the antenna 2, the wireless communication module 191, and the mobile communication module 192.

A touchscreen (or a touch panel) of the wearable device may respond to a function of a conductor on the touchscreen. When a surface of the touchscreen is exposed to water, a capacitance value at a position at which the touchscreen is exposed to water changes correspondingly. Based on this principle, the touchscreen of the wearable device may be used to determine whether the device is in an immersion state. Events such as a user tap, water on a surface of a touchscreen, and a temperature change also cause changes in the capacitance value of the surface of the touchscreen. These events may interfere with correct identification of a usage status of the wearable device and determining of an activity status of the user.

In a swimming scenario, to more accurately use the touch panel of the wearable device to determine a usage status of the wearable device and identify a swimming state of a user, this application provides a device status detection method. The following describes the method.

Before embodiments of this application are described, the following terms and nouns that may be used in the following examples are first explained and described.

A micro control unit (micro control unit, MCU), also referred to as a single-chip microcomputer, is an integrated circuit used to control device operations and a feature system.

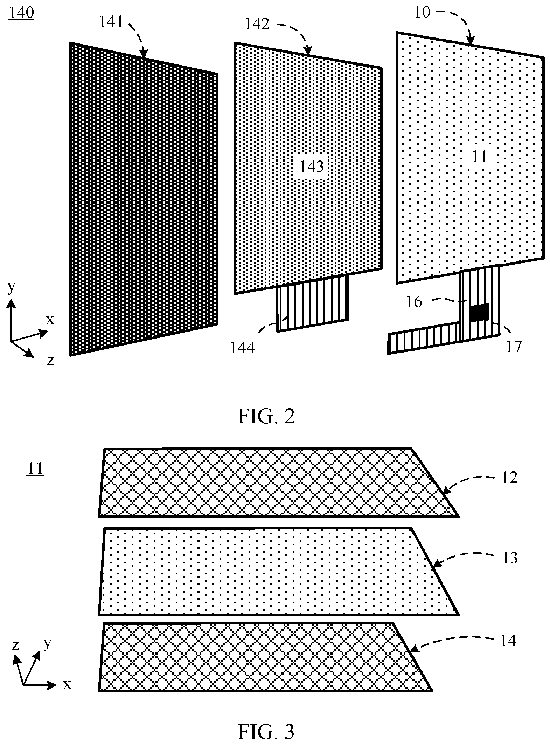

FIG. 2 is an example diagram of a structure of the display 140. The display 140 may include a circuit board 141, a display panel 142, and a touch panel 10. The three display components may be sequentially stacked. The touch panel 10 may be located on an outer side of the display 140, and is configured to respond to a touch operation of a user, to implement a touch function of the display 140. The display panel 142 may be disposed between the circuit board 141 and the touch panel 10, and the display panel 142 may include a plurality of display units arranged in an array, to implement a display function of the display 140. The circuit board 141 may be provided with a signal processing circuit. The signal processing circuit may be configured to process signals from the display panel 142 and the touch panel 10. The signal processing circuit may further send the signals from the display panel 142 and the touch panel 10 and processing results of the signals to the processor 110 of the wearable device 100 for subsequent processing.

In some examples, the display panel 142 may include a display module 143 and a display module connection board 144. The display module 143 may be of a multi-layer structure. This is not limited in this application. One end of the display module connection board 144 may be electrically connected to the display module 143, and the other end may be electrically connected to the circuit board 141, to transmit data information, a control signal, and/or the like between the circuit board 141 and the display module 143.

In some examples, the touch panel 10 may include a touch module 11 and a touch module connection board 16. One end of the touch module connection board 16 may be electrically connected to the touch module 11, and the other end may be electrically connected to the circuit board 141, to transmit data information and/or a control signal between the circuit board 141 and the touch module 11.

In some examples, the touch panel 10 may further include a processing unit 17. The processing unit 17 may be electrically connected to both the touch module 11 and the touch module connection board 16. For example, the processing unit 17 may be an MCU. The processing unit 17 may be configured to control power-on and/or power-off of different areas of the touch module 11, and the processing unit 17 may also be configured to respond to an operation acting on the touch module 11, to determine a position of the operation acting on the touch module 11. For example, the processing unit 17 may be mounted on the touch module connection board 16.

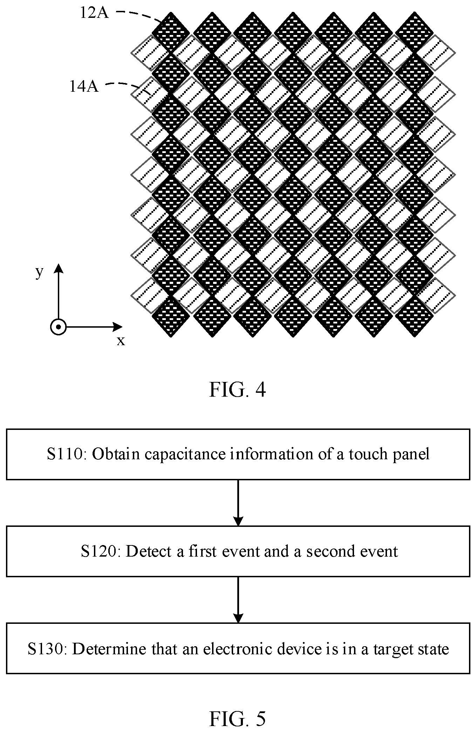

FIG. 3 and FIG. 4 are example diagrams of a structure of the touch module 11. In some examples, the touch module 11 may include a first electrode layer 12, an insulation layer 13, and a second electrode layer 14 that are sequentially stacked. Herein, the first electrode layer 12, the insulation layer 13, and the second electrode layer 14 may all be transparent, so that a light beam generated by the display panel 142 located below the touch panel 10 can pass through the touch panel 10.

In some examples, the first electrode layer 12 may include a plurality of first electrode patches 12A arranged in an array, and the second electrode layer 14 may include a plurality of second electrode patches 14A arranged in an array. For example, the plurality of first electrode patches 12A may be connected to each other in a first direction to form a first electrode strip, and a plurality of first electrode strips may be arranged in a second direction to form the first electrode layer 12. Similarly, the plurality of second electrode patches 14A may be connected to each other in a third direction to form a second electrode strip, and a plurality of second electrode strips may be arranged in a fourth direction to form the second electrode layer 14.

For example, as shown in FIG. 4, the first electrode patches 12A may be connected to each other in a y-axis direction to form the first electrode strip, and a plurality of first electrode strips may be arranged in a z-axis direction to form the first electrode layer 12. The second electrode patches 14A may be connected to each other in an x-axis direction to form the second electrode strip, and a plurality of second electrode strips may be arranged in the y-axis direction to form the second electrode layer 14. In some scenarios, the first electrode layer 12 of the foregoing structure may also be referred to as a horizontal electrode layer 12, and the second electrode layer 14 may also be referred to as a vertical electrode layer 14.

The plurality of first electrode patches 12A arranged in an array in the first electrode layer 12 and the plurality of second electrode patches 14A arranged in an array in the second electrode layer 14 may be alternately arranged, so that electrode patches can be disposed in different areas in a plane in which the touch module 11 is located, to respond to touch operations of the user at different positions.

In a possible implementation, a high-frequency current may be applied to the first electrode patches 12A and/or the second electrode patches 14A in the first electrode layer 12 and the second electrode layer 14. When a conductor (for example, skin of the user) is in contact with the touch panel 10, the conductor may form coupling capacitance with the electrode patch at a contact position of the conductor. The high-frequency current may be conducted through the coupling capacitance, that is, a loop of the high-frequency current is formed. A current in the loop may be captured, and the captured current may be used to determine a position at which the conductor is in contact with the touch panel 10.

In one contact event, coupling capacitance generated by different electrode patches in the touch panel 10 varies based on a distance from the contact position. In other words, a capacitance value of the coupling capacitance on the touch panel 10 may vary with the touch panel 10. Before, during, and after the contact event, a capacitance value of coupling capacitance generated by a same electrode patch also varies. In other words, the capacitance value of the coupling capacitance generated by the same electrode patch in the touch panel 10 may also vary with time. In addition, for different conductors and different contact events, the capacitance value of the coupling capacitance generated by the same electrode patch may also be different.

By collecting, analyzing, and processing one or more of the foregoing information, a type and/or a duration of a contact event acting on the touch panel 10 can be determined to some extent, and a device status of the wearable device 100 can be determined to some extent.

For ease of description, in the following, information generated by the touch panel 10 in response to the contact event is referred to as capacitance information. The capacitance information may include one or more of the following information: a capacitance value of the touch panel, a relationship between the capacitance value of the touch panel and time, or a distribution of the capacitance value of the touch panel. Herein, the capacitance value of the touch panel may be understood as capacitance values of coupling capacitance generated at different capacitance value detection sites of the touch panel. Similarly, the relationship between the capacitance value of the touch panel and time may be understood as a relationship between time and the capacitance values of the coupling capacitance generated at different capacitance value detection sites of the touch panel. The distribution of the capacitance value of the touch panel may be understood as a relationship between positions of different detection sites and the capacitance values of the coupling capacitance generated at different capacitance value detection sites of the touch panel.

For ease of description, in the following examples, the capacitance value detection site is referred to as a detection site or a site for short, and the following does not distinguish the three expressions.

It should be noted that the contact event may include direct contact between a conductor and the touch panel 10 or may include that the conductor and the touch panel 10 approach each other to a specific distance (not directly in contact with each other). In other words, any event that can change the capacitance value of the touch panel 10 can be understood as the contact event.

It should be noted that in the following examples, similar expressions such as a "preset duration", a "preset threshold", and a "preset capacitance value may be used". In these expressions, a same name may correspond to a same value, or may correspond to different values. Whether these same expressions correspond to a same value needs to be determined with reference to an actual technical solution or context, and expressions with same names should not be considered as having a same value.

FIG. 5 is a diagram of a device status detection method according to an embodiment of this application. An electronic device may detect, based on capacitance information of a touch panel, whether a specific event occurs, and when the event occurs, determine that the device is in a target state.

S110: The electronic device obtains the capacitance information of the touch panel.

Herein, the electronic device may be a portable device like a mobile phone or a tablet computer, or may be a wearable device like a watch or a band. This is not limited in this application.

The touch panel may be a component of a display of the electronic device, and may be configured to implement a response of the electronic device to a touch operation of a user. In some scenarios, the touch panel may also be referred to as a touchscreen. In some examples, the touch panel may be a surface capacitive touch panel or a projected capacitive touch panel, for example, a self-capacitive touch panel or a mutual-capacitive touch panel.

An electrical connection line may be disposed between the touch panel and a data processing module (for example, a central processing unit) of the electronic device. The data processing module of the electronic device may obtain information about or a status change of each component in a circuit of the touch panel through the electrical connection line.

In some examples, the electronic device may obtain the capacitance information of the touch panel. As described above, the capacitance information may include one or more of the following: a capacitance value of the touch panel, a relationship between the capacitance value of the touch panel and time, or a distribution of the capacitance value of the touch panel.

A plurality of capacitance value detection sites may be set on the touch panel. In some scenarios, the foregoing capacitance information may also be understood as including one or more of the following: a capacitance value of a detection site on the touch panel, a relationship between the capacitance value of the detection site on the touch panel and time, or a relationship between a position of the detection site and the capacitance value of the detection site on the touch panel.

In a possible implementation, a process in which the electronic device obtains the capacitance information may include: obtaining, by using the data processing unit (for example, an MCU) disposed on the touch panel, the capacitance information detected at different sites on the touch panel; or obtaining, by using a CPU, the capacitance information detected at different sites on the touch panel; or obtaining, by using the data processing unit of the touch panel, the capacitance information detected at different sites on the touch panel, where the data processing unit of the touch panel may preliminarily process the obtained capacitance information to generate a preliminary processing result, and obtains, by using the CPU, the processing result obtained after the preliminary processing of the capacitance information.

S 120: The electronic device determines, based on the capacitance information, whether a first event and a second event are detected.

Whether the first event and the second event occur may be determined based on the capacitance information obtained by the electronic device.

In some examples, the electronic device may simultaneously detect whether the first event and the second event occur, or the electronic device may detect whether the second event occurs when detecting the first event, or the electronic device may detect whether the first event occurs when detecting the second event. This is not limited in this application.

Herein, in a scenario in which the electronic device simultaneously detects whether the first event and the second event occur, the first event and the second event may also be considered as one event.

In some examples, the first event may include: At least a preset quantity of capacitance value detection sites among a plurality of capacitance value detection sites of the touch panel detects capacitance values that reach a preset threshold. Assuming that a quantity of detection sites included in the touch panel is M, and the preset threshold of the capacitance value is Ci, the first event may be understood as including: Capacitance values of at least N of the M detection sites are greater than or equal to Ci, where N≤M, and both N and M are positive integers.

It should be noted that, in the first event, a distribution of the preset quantity of capacitance value detection sites is not limited.

In some examples, the second event may include: A duration of the first event is greater than or equal to a preset duration. The preset duration is denoted as T1. The second event may be understood as that the duration of the first event is greater than or equal to T1.

In some examples, the second event may include: Fluctuation (change or increment) of a capacitance value of the touch panel within the preset duration meets a preset requirement, and the floating of the capacitance value of the touch panel is denoted as △C. For example, the preset requirement may be β≤△C≤γ, where 0<β<γ. For example, the preset condition may alternatively be β≤ΔC, where 0<β. For example, the preset condition may alternatively be △C≤γ. Herein, β and γ may be preset values.

In some examples, the second event may include: A distribution of the capacitance value of the touch panel meets a preset requirement. Based on different directions, angles, and the like of the electronic device existing when entering in a target state, capacitance values of detection sites in different areas of the touch panel may change in different sequences. In other words, when capacitance values of the detection sites on the touch panel and a quantity of the detection sites meet a requirement of the first event, a relative position relationship or a distribution in a plane of the plurality of detection sites may have a plurality of cases. In these cases, if the relative position relationship of the plurality of detection sites meets the foregoing preset requirement, it may be determined that the second event is triggered.

For example, the preset requirement may mean that a plurality of detection sites whose capacitance values meet a requirement of the preset threshold Ci are not relatively separated in distribution. In other words, the detection sites whose capacitance values meet the requirement of the preset threshold Ci are consecutive in spatial distribution.

In some examples, the second event may include one or more of the foregoing three cases.

It should be noted that, for the determined first event, the second event may be associated with the first event. For example, the second event is that a duration of the first event meets a preset duration requirement. Alternatively, the second event may be independent of the first event. For example, the first event is that capacitance values detected at a specific quantity of capacitance value detection sites on the touch panel are greater than or equal to a preset capacitance value, and the second event is that a distribution of the capacitance value of the touch panel meets a preset requirement.

S130: Determine whether the electronic device is in the target state.

The target state may include a state in which a part or all of the electronic device is covered by conductive liquid, in other words, a state in which a part or all of the electronic device is immersed in the conductive liquid. For example, if the conductive liquid is water, the target state may be that a part or all of the electronic device is immersed in the water.

When the conductive liquid covers a surface of the touch panel, the conductive liquid is coupled to an electrode patch in the touch panel to form coupling capacitance, thereby affecting capacitance values detected at different detection sites of the touch panel.

In some examples, when determining, based on the capacitance information obtained from the touch panel, that the first event and the second event occur, the electronic device may determine that the electronic device is in the target state, for example, at least partially immersed in water.

In other words, if the capacitance information of the touch panel indicates that both requirements of the first event and the second event in S120 are met, the electronic device may determine that the electronic device is in the target state.

It should be noted that, in a possible implementation, the electronic device may determine, only based on whether the first event is triggered, whether the electronic device is in the target state. In this case, a threshold of the capacitance value of the touch panel in the first event and/or a threshold of a quantity of detection sites that meet a capacitance value threshold requirement need/needs to be more accurate, that is, the electronic device needs higher resolution of different capacitance values of the touch panel, or the electronic device needs better performance of detecting the capacitance value.

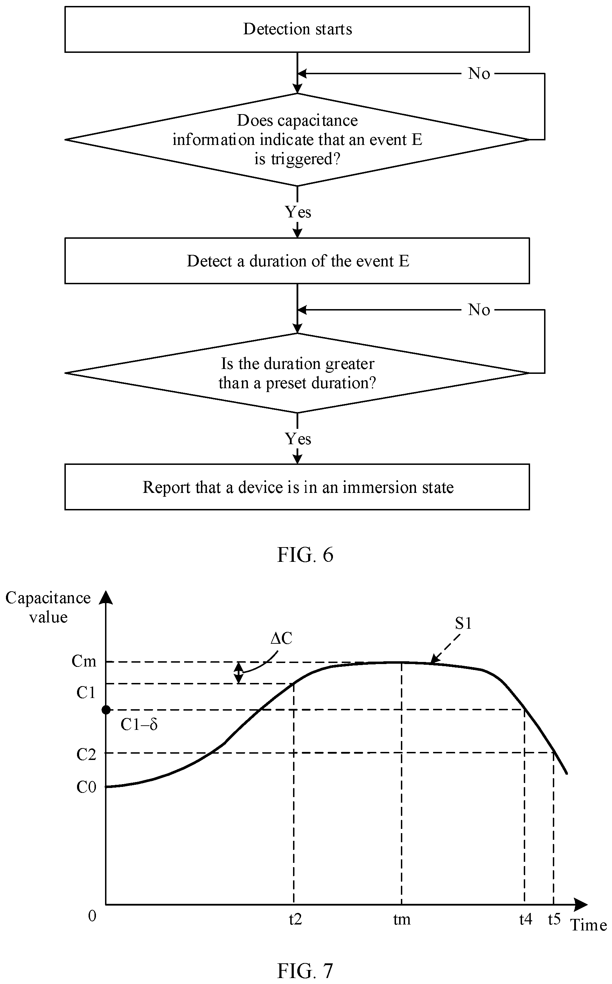

For example, the second event is that the duration of the first event meets the preset requirement. FIG. 6 is an example diagram of a method for detecting whether an electronic device is in an immersion state.

A curve S1 in FIG. 7 shows a continuous change of a capacitance value detected at a capacitance value detection site Loc1 of the touch panel of the electronic device during transition from an out-of-water state to an immersion state and transition from the immersion state to the out-of-water state.

Before the electronic device is immersed in water, a capacitance value detected at the capacitance value detection site Loc1 is C0. As the capacitance value detection site Loc1 is gradually immersed in water, the capacitance value detected at the capacitance value detection site Loc1 gradually increases, gradually increases from C0 to C1 at a moment t2, and then increases to Cm at a moment tm. Subsequently, the capacitance value detected at the capacitance value detection site Loc1 gradually decreases to C1 at a moment t4.

In some examples, the capacitance value C1 at the moment t2 may be used as a preset threshold for detecting whether an event E is triggered. For example, when the capacitance information of the touch panel indicates that capacitance values detected at not less than N of M detection sites are greater than or equal to C1, the electronic device may determine that the event E is detected. On this basis, the electronic device may continuously obtain the capacitance information of the touch panel, and detect a duration of the event E.

For example, a shortest duration of the event E may be a time difference between tm and t2. In other words, after the electronic device detects the event E at the moment t2, if the capacitance information of the touch panel indicates that the event E is triggered within a duration (tm-t2), the electronic device may determine that the duration of the event E meets a preset requirement. In this way, the electronic device may determine that the electronic device is in an immersion state.

In some scenarios, that a capacitance value detected at a detection site at the moment tm reaches Cm may be considered as another event W different from the event E. Based on this, the foregoing solution may also be understood as follows: After the electronic device detects the event E at the moment t2, if the capacitance information of the touch panel indicates that the event W is triggered within the duration (tm-t2), the electronic device may determine that the electronic device is in an immersion state.

For example, the shortest duration of the event E may alternatively be a difference between t4 and t2. In other words, after the electronic device detects the event E at the moment t2, if the capacitance information of the touch panel indicates that the event E is triggered within a duration (t4-t2), the electronic device may determine that the duration of the event E meets a preset requirement. In this way, the electronic device may determine that the electronic device is in an immersion state.

It should be noted that the change of the curve S1 in FIG. 7 is merely an example for description, and this is not limited in this application. For example, within a time period from t2 to t4, a capacitance value detected at detection sites may be in a fluctuating state, and the capacitance value Cm may be detected a plurality of times at the detection sites.

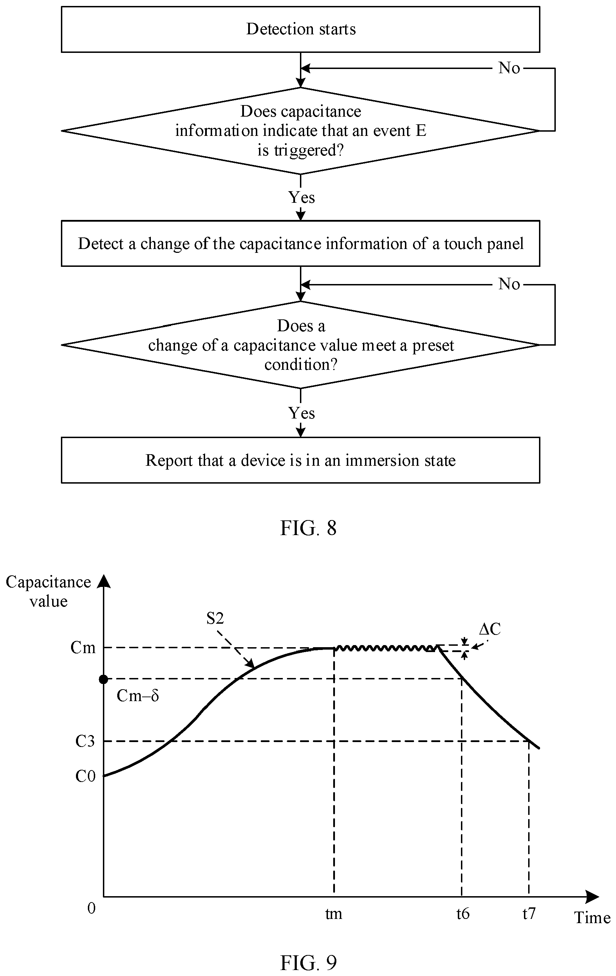

For example, the second event is that the change of the capacitance information of the touch panel meets the preset requirement. FIG. 8 is an example diagram of another method for detecting whether an electronic device is in an immersion state.

The electronic device may determine, based on capacitance information of a touch panel, whether to trigger an event E. When detecting that the event E is triggered, the electronic device may determine whether a change of the capacitance information of the touch panel meets a preset requirement. If the change of the capacitance information meets the preset requirement, the electronic device may determine that the electronic device is in an immersion state.

In some examples, as shown in FIG. 7, the event E may mean that capacitance values of at least N of the M detection sites of the touch panel are greater than or equal to C1.

For example, the electronic device may detect a change of the capacitance value of the touch panel after detecting the event E at a moment t2. If an increase in the capacitance value of the touch panel is greater than or equal to (Cm-C1) within a preset duration, it may be determined that the change of the capacitance value of the touch panel meets the preset requirement, and then the electronic device may determine that the electronic device is in an immersion state. The preset duration herein may be a time difference between a moment tm and the moment t2.

For example, the electronic device may detect a change of the capacitance value of the touch panel from a moment 0. After detecting the event E at the moment t2, the electronic device continuously reads the change of the capacitance value of the touch panel. If an increase in the capacitance value of the touch panel is greater than or equal to (Cm-C0) within preset duration, it may be determined that the change of the capacitance value of the touch panel meets the preset requirement, and then the electronic device may determine that the electronic device is in an immersion state. For example, the preset duration herein may be a time difference between the moment tm and the moment 0, namely, tm.

In some examples, as shown in FIG. 9, the event E may mean that capacitance values of at least N of M detection sites of the touch panel are greater than or equal to Cm.

For example, the electronic device may detect a change of the capacitance value of the touch panel after detecting the event E at the moment tm. If an absolute value of a capacitance value variation of the touch panel is not greater than ΔC within preset duration, it may be determined that the change of the capacitance value of the touch panel meets the preset requirement, and then the electronic device may determine that the electronic device is an immersion state. The preset duration herein may be a time difference between the moment tm and a moment t6.

In a possible implementation, the change of the capacitance value of the touch panel may be an average change of capacitance values detected at the M detection sites on the touch panel, or may be an average change of capacitance values detected at N that is of the M detection sites on the touch panel and whose capacitance values are greater than or equal to Ci, or may be an average change of capacitance values detected at (M-N) that is of the M detection sites on the touch panel and whose capacitance values are less than Ci.

In a possible implementation, the change of the capacitance value of the touch panel may further refer to a median of changes of capacitance values detected at a plurality of detection sites on the touch panel, or the like. A calculation method of the change of the capacitance value is not limited in this application.

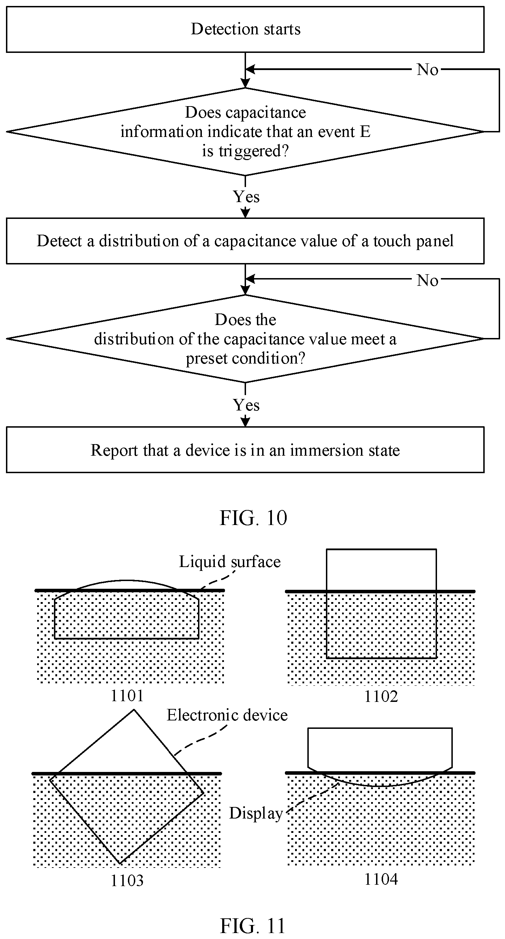

For example, the second event is that the distribution of the capacitance value of the touch panel meets the preset requirement. FIG. 10 is an example diagram of another method for detecting whether an electronic device is in an immersion state.

The electronic device may determine, based on capacitance information of a touch panel, whether to trigger an event E. When detecting that the event E is triggered, the electronic device may determine whether a distribution of capacitance values detected at different detection sites of the touch panel meets a preset requirement. If the distribution of the capacitance value of the touch panel also meets the preset requirement, the electronic device may determine that the electronic device is in an immersion state.

FIG. 11 shows several diagrams of immersion states of an electronic device. In a diagram 1101, the electronic device vertically enters water in a thickness direction of a display, and the display enters water later. In a diagram 1102, the electronic device enters water in a length direction or a width direction of the display. In a diagram 1103, the electronic device enters water at an angle relative to the length direction or the width direction of the display. In a diagram 1104, the electronic device enters water in the thickness direction of the display, and the display enters water first.

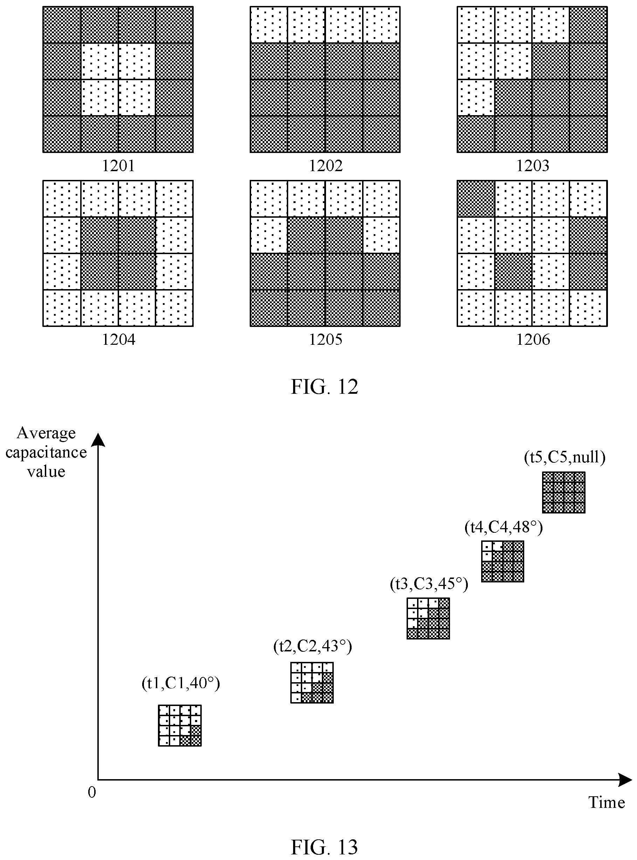

The diagrams 1201 to 1205 in FIG. 12 are diagrams of a distribution of capacitance values of a touch panel in different immersion states of the electronic device in FIG. 11. The diagram 1206 in FIG. 12 is a diagram of a distribution of capacitance values of a touch panel in a scenario of water on a surface of a display of the electronic device.

The diagram 1201 shows a distribution of capacitance values of the touch panel of the electronic device when the electronic device is immersed in water in the manner shown in the diagram 1101. In the diagram 1101, a peripheral area of the display of the electronic device is located below a liquid surface, and a middle area is located above the liquid surface. In other words, a peripheral area of the touch panel of the electronic device is covered by conductive liquid, and a middle area of the touch panel is not covered by the conductive liquid. A detection site located in the peripheral area of the touch panel detects a larger capacitance value, and a detection site located in the middle area of the touch panel detects a smaller capacitance value.

The diagram 1202 shows a distribution of capacitance values of the touch panel of the electronic device when the electronic device is immersed in water in the manner shown in the diagram 1102. In diagram 1102, a lower area of the display of the electronic device is located below the liquid surface, an upper area is located above the liquid surface, and a plane on which the liquid surface is located is parallel to the length direction or the width direction of the display of the electronic device. In other words, a lower area of the touch panel of the electronic device is immersed in the conductive liquid, and an upper area of the touch panel is not immersed in the conductive liquid. A detection site located in the lower area of the touch panel detects a larger capacitance value, and a detection site located in the upper area of the touch panel detects a smaller capacitance value.

The diagram 1203 shows a distribution of capacitance values of the touch panel of the electronic device when the electronic device is immersed in water in the manner shown in the diagram 1103. In the diagram 1103, a lower area of the display of the electronic device is located below the liquid surface, an upper area is located above the liquid surface, and a plane on which the liquid surface is located forms an angle relative to the length direction or the width direction of the display of the electronic device. In other words, a lower area of the touch panel of the electronic device is immersed in the conductive liquid, and an upper area of the touch panel is not immersed in the conductive liquid. A detection site located in the lower area of the touch panel detects a larger capacitance value, and a detection site located in the upper area of the touch panel detects a smaller capacitance value.

The diagram 1204 shows a distribution of capacitance values of the touch panel of the electronic device when the electronic device is immersed in water in the manner shown in the diagram 1104. In the diagram 1104, a middle area of the display of the electronic device is located below the liquid surface, and a peripheral area is located above the liquid surface. In other words, a middle area of the touch panel of the electronic device is covered by the conductive liquid, and a peripheral area of the touch panel is not covered by the conductive liquid. A detection site located in the middle area of the touch panel detects a larger capacitance value, and a detection site located in the peripheral area of the touch panel detects a smaller capacitance value.

The diagram 1205 shows another possible distribution of capacitance values of the touch panel when the electronic device is in an immersion state, and the diagram 1206 shows s distribution of capacitance values of the touch panel when different areas on a surface of a display of the electronic device are covered with a water drop.

In the diagram 1205, detection sites whose capacitance values meet a threshold requirement of a capacitance value are consecutively distributed, in other words, the capacitance values that meet a threshold requirement in the diagram 1205 are distributed in a plurality of mutually consecutive areas on the touch panel. In the diagram 1206, detection sites whose capacitance values meet a threshold requirement of a capacitance value are distributed in a dispersed manner, in other words the capacitance values that meet a threshold requirement in the diagram 1206 are distributed in a plurality of mutually separated areas on the touch panel.

With reference to the distribution of the capacitance values of the touch panel of the electronic device in different immersion states, in some examples, a preset condition that needs to be met by the distribution of the capacitance values of the touch panel of the electronic device may include: Detection sites indicating triggering of the event E are consecutively distributed on the touch panel. In other words, N sites that meet a preset threshold requirement are partially or all consecutively distributed. For example, in the N sites that meet a preset threshold requirement, N-3 sites are consecutive, and three sites are not consecutive.

In some examples, the electronic device may determine an immersion direction of the electronic device, and even an immersion angle, based on a distribution of the capacitance value on the touch panel and/or a change of the distribution of the capacitance value.

FIG. 13 is a diagram of a relationship between a capacitance value of a touch panel of an electronic device and time in a process of an immersion event. As shown in FIG. 13, within a time period from t1 to t5, a quantity of detection sites that meet a preset threshold requirement and that are on the touch panel gradually increases, and at the moment t1, a detection site that meets the preset threshold requirement first appears in a lower-right corner of the touch panel. As time increases, these detection sites that meet the preset threshold requirement gradually increase from the lower-right corner to an upper-left corner of the touch panel. In other words, in this immersion event, a lower-right corner of the electronic device is first immersed, and an upper left corner is finally immersed.

An immersion direction of the electronic device in this immersion event may be roughly determined by studying an angle between a frame (length direction or width direction) of the electronic device and a boundary line distinguishing the detection site that meets the preset threshold requirement from the detection site that does not meet the preset threshold requirement.

For example, at five moments in the time period from t1 to t5, angles between the foregoing boundary line and the length direction of the electronic device are 40°, 43°, 45°, 48°, and null (namely, a state in which capacitance values of all detection sites on the touch panel can meet the preset threshold requirement). Accordingly, it may be roughly determined that the immersion direction of the electronic device in this immersion event is roughly at an angle of 45° relative to the length direction of the electronic device.

In a possible implementation, the electronic device may further obtain a relationship between an average capacitance value of the touch panel and time in an immersion process, to verify a relationship between a distribution of the capacitance value of the touch panel and time. For example, at five moments in the time period from t1 to t5, average capacitance values of the touch panel are respectively C1, C2, C3, C4, and C5. In a possible case, as a quantity of detection sites that meet a preset threshold requirement gradually increases, average capacitance values detected at all detection sites of the touch panel may gradually increase, that is, C5>C4>C3>C2>C1.

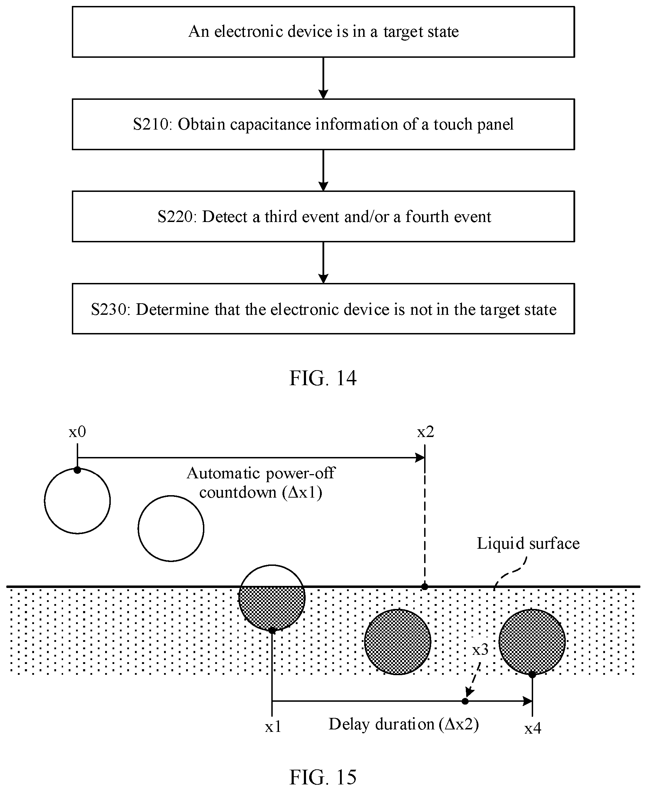

When the electronic device is in the target state, the electronic device may determine, based on the capacitance information of the touch panel, whether the electronic device leaves the target state, or determine whether the electronic device is no longer in the target state. FIG. 14 shows an example of a method for determining, based on capacitance information, whether an electronic device is no longer in a target state.

S210: The electronic device obtains the capacitance information of a touch panel.

Herein, the capacitance information may include one or more of the following: a capacitance value of the touch panel, a relationship between the capacitance value of the touch panel and time, or a distribution of the capacitance value of the touch panel.

In some scenarios, the capacitance information may also be understood as including one or more of the following: a capacitance value of a detection site on the touch panel, a relationship between the capacitance value of the detection site on the touch panel and time, or a relationship between a position of the detection site and the capacitance value of the detection site on the touch panel.

In some examples, the electronic device may obtain the capacitance information by using a data processing unit of the touch panel, or may obtain the capacitance information by using a central processing unit of the electronic device. When the central processing unit is used to obtain the capacitance information, the capacitance information may include a result of preliminary processing performed by the data processing unit of the touch panel on the capacitance value detected at the detection site of the touch panel.

S220: The electronic device determines, based on the capacitance information, whether a third event and/or a fourth event are/is detected.

The third event and/or the fourth event may be used to determine whether the electronic device is no longer in a target state, or the third event and/or the fourth event may be used to determine whether the electronic device is no longer immersed in a conductive liquid.

In a process in which the electronic device is changed from a state of being immersed in the conductive liquid to a state of not being immersed in the conductive liquid, the touch panel of the electronic device is changed from a state of being covered by the conductive liquid to a state of not being covered by the conductive liquid. Therefore, capacitance values detected at a plurality of detection sites on the touch panel also change accordingly.

In some examples, the third event may include that capacitance values detected at a plurality of detection sites of the touch panel significantly decrease.

For example, when the electronic device is in a target state, capacitance values detected at at least N of the M detection sites of the touch panel are greater than or equal to a preset threshold Ci, where N≤M, and both N and M are positive integers. On this basis, the third event may include: Capacitance values of at least Q of the M detection sites are less than or equal to a preset threshold Cj, where Q≤M, and Q is a positive integer.

Herein, the preset threshold Cj is less than the preset threshold Ci. In other words, when the electronic device is not in a target state, for example, not in an immersion state, capacitance values detected at the plurality of detection sites on the touch panel of the electronic device decrease.

It should be noted that, when the electronic device is in a target state, capacitance values detected at M-N detection sites on the touch panel of the electronic device are less than the preset threshold Ci. Because the electronic device being in a target state and the electronic device not being in a target state cannot be true at the same time, to avoid misunderstanding, in some examples, a value of Q may meet Q>M-N, that is, Q+N>M.

The curve S1 in FIG. 7 is used as an example. The preset threshold Ci used to determine whether the electronic device is in a target state may be C1 in FIG. 7, and the preset threshold Cj used to determine whether the electronic device is not in a target state may be (C1-δ) in FIG. 7, where δ>0.

In other words, when the electronic device is in a target state, the capacitance values detected at the at least N of the M detection sites of the touch panel are greater than or equal to C1 in FIG. 7, and when the electronic device is not in a target state, the capacitance values detected by the at least Q of the M detection sites of the touch panel are less than or equal to (C1-δ) in FIG. 7.

By way of example but not limitation, the electronic device may detect the third event at a moment at which the electronic device detects that the electronic device is in a target state or slightly later than the moment (for example, the moment tm in FIG. 7 or slightly later than the moment tm).

In some examples, the fourth event may include that capacitance value variations (decreases) detected at a plurality of detection sites of the touch panel within a preset duration are greater than or equal to a preset threshold.

The curve S1 in FIG. 7 is used as an example. Within a time period from t4 to t5, a capacitance value detected by the touch panel gradually decreases from (C1-δ) at the moment t4 to C2 at the moment t5. In some examples, C2 may be slightly greater than C0, or C2 may be equal to C0.

For example, at the moment t5, the electronic device is no longer in a target state. The preset duration may be less than or equal to the time period from t4 to t5. A capacitance value variation of the touch panel within the preset duration may be a difference between C2 and (C1-δ) (a negative value indicating that the capacitance value decreases).

In some examples, the electronic device may start to detect a change of the capacitance information of the touch panel and detect the fourth event at a moment at which the electronic device detects that the electronic device is in a target state, for example, at the moment tm in FIG. 7. For example, from the moment tm, if a capacitance value variation of the touch panel within the preset duration (for example, an interval length between t4 and t5 in the foregoing description) is greater than or equal to a preset threshold (for example, a difference between C2 and (C1-δ) in the foregoing description), the electronic device may determine that the fourth event is detected.

In some examples, the electronic device may start to detect a change of the capacitance information of the touch panel and detect the fourth event after a moment at which the electronic device detects that the electronic device is in a target state (after the moment tm in FIG. 7), for example, the moment t4. For example, from the moment t4, if the capacitance value variation of the touch panel within the preset duration (for example, the interval length between t4 and t5 in the foregoing description) is greater than or equal to the preset threshold (for example, the difference between C2 and (C1-δ) in the foregoing description), the electronic device may determine that the fourth event is detected.

In a possible case, in this example, capacitance value variations (decreases) detected at a plurality of detection sites on the touch panel within a time period from tm to t4 are greater than or equal to a preset threshold, that is, the electronic device may detect the third event within the time period from tm to t4. In this case, the solution in this example may also be understood as that after detecting the third event within the time period from tm to t4, the electronic device detects the fourth event from the moment t4, and detects the fourth event at the moment t5.

A curve S2 in FIG. 9 is used as an example. Within a time period from t6 to t7, a capacitance value detected by the touch panel gradually decreases from (Cm-δ) at the moment t6 to C3 at the moment t7. In some examples, C3 may be slightly greater than C0, or C3 may be equal to C0.

For example, at the moment t7, the electronic device is no longer in a target state. The preset duration may be less than or equal to the time period from t6 to t7. A capacitance value variation of the touch panel may be a difference between C3 and (Cm-δ) (a negative value indicating that the capacitance value decreases).

In some examples, the electronic device may start to detect the fourth event at a moment at which the electronic device detects that the electronic device is in a target state, for example, at the moment tm in FIG. 9. For example, from the moment tm, if a capacitance value variation of the touch panel within the preset duration (for example, an interval length between t6 and t7 in the foregoing description) is greater than or equal to a preset threshold (for example, a difference between C3 and (Cm-δ) in the foregoing description), the electronic device may determine that the fourth event is detected.

In some examples, after the moment at which the electronic device detects that the electronic device is in a target state (after the moment tm in FIG. 9), for example, the electronic device starts to detect a change of the capacitance information of the touch panel and detect the fourth event at the moment t6 in FIG. 9. For example, from the moment t6, if the capacitance value variation of the touch panel within the preset duration (for example, the interval length between t6 and t7 in the foregoing description) is greater than or equal to the preset threshold (for example, the difference between C3 and (Cm-δ) in the foregoing description), the electronic device may determine that the fourth event is detected.

In a possible case, in this example, capacitance value variations (decreases) detected at a plurality of detection sites on the touch panel within a time period from tm to t6 are greater than or equal to a preset threshold, that is, the electronic device may detect the third event within the time period from tm to t6. In this case, the solution in this example may also be understood as that after detecting the third event within the time period from tm to t6, the electronic device detects the fourth event from the moment t6, and detects the fourth event at the moment t7.

In some examples, the third event and the fourth event may be a same event, or the third event may include the fourth event, or the electronic device may detect the third event and the fourth event at the same time.

S230: When determining that the third event and/or the fourth event are/is detected, the electronic device may determine that the electronic device is not in a target state.

That the electronic device is not in a target state may include a state in which the electronic device is not immersed in a conductive liquid, for example, a state in which the electronic device is not in water.

When the electronic device is not immersed in the conductive liquid, a capacitance value of coupling capacitance on a surface of the touch panel decreases, so that the third event and/or the fourth event can be triggered.

In some examples, the electronic device may determine, when detecting the third event or the fourth event, that the electronic device is not in a target state. In this case, the electronic device detects the third event or the fourth event separately.

In some examples, the electronic device may determine, when detecting both the third event and the fourth event, that the electronic device is not in a target state. In this case, the electronic device may detect the third event and the fourth event at the same time. For this solution, the third event and the fourth event detected by the electronic device may be used as one event. Alternatively, the electronic device may detect the fourth event based on detection of the third event. Alternatively, the electronic device may detect the third event based on detection of the fourth event.

The touch panel of the electronic device may be provided with an automatic power-off function. For example, in response to a case in which no operation performed by a user on the electronic device is detected within preset duration, the electronic device may power off the touch panel. In a possible case, when the electronic device detects the first event, the electronic device continues to detect the second event. When the second event is not detected, a countdown of automatic power-off of the touch panel ends, and the electronic device powers off the touch panel. As a result, the second event fails to be detected, and the electronic device cannot successfully determine whether the electronic device is in a target state.

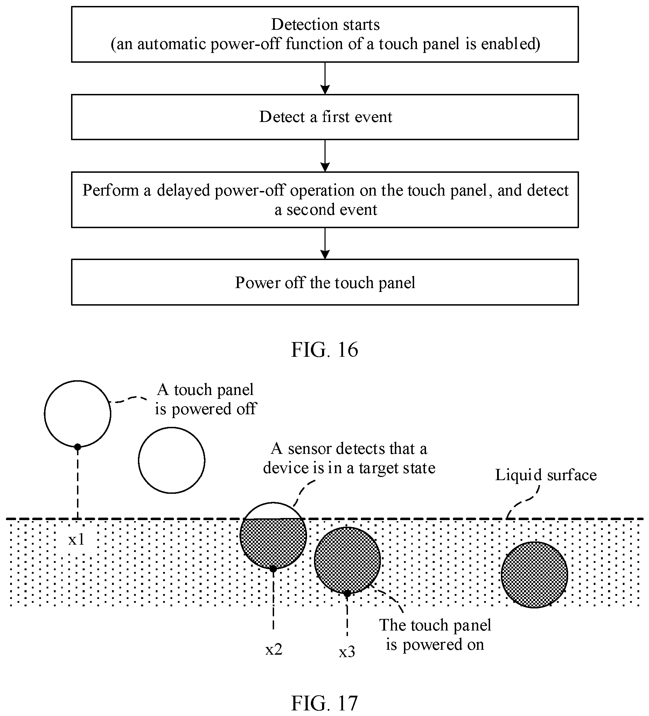

To resolve the foregoing problem, this application provides another method for detecting a status of an electronic device. When an automatic power-off function of a touch panel of the electronic device is enabled, in response to a case in which the electronic device detects a first event, the electronic device may perform delayed power-off for the touch panel, to increase a probability that the electronic device successfully detects a second event. The following provides descriptions with reference to FIG. 15 and FIG. 16.

The following uses, as an example, a process in which an electronic device shown in FIG. 15 enters a target state from not being in a target state. From a moment x0 before entering a target state, the electronic device enters an automatic power-off countdown for a touch panel, and a countdown duration is Δx1. If processing is performed in an automatic power-off manner, the touch panel automatically powers off at a moment x2 after the countdown Δx1 ends. At a moment x1 before the automatic power-off countdown ends, the electronic device detects the first event (a capacitance value detected at a specific proportion of detection sites in a plurality of detection sites on the touch panel reaches a preset threshold).

To determine whether the electronic device is in a target state, the electronic device may perform a delayed power-off operation on the touch panel after detecting the first event, or the electronic device may perform automatic power-off on the touch panel after a delay duration Δx2 after detecting the first event.

The delay duration Δx2 may meet a requirement of detecting one or more of the foregoing second events by the electronic device.

In some examples, the second event may be: A duration of the first event is greater than or equal to a preset duration T1. In this case, the delay duration Δx2 should be greater than or equal to T1.

In some examples, the second event may be: Fluctuation (change or increment) of a capacitance value of the touch panel within preset duration T2 meets a preset requirement. In this case, the delay duration Δx2 should be greater than or equal to T2.

In some examples, the second event may be: A distribution of the capacitance value of the touch panel meets a preset requirement. In this case, the delay duration Δx2 should not be shorter than a shortest duration within which the electronic device can obtain the distribution of the capacitance value of the touch panel.

In a possible case, the electronic device detects one or more of the foregoing second events at an x3 moment within the delay duration Δx2 after the x1 moment, and may further determine that the electronic device is in a target state. The electronic device may power off the touch panel at the x3 moment or slightly later than the x3 moment. Alternatively, the electronic device may enter an automatic power-off countdown at the moment x3, and if no operation performed by the user on the electronic device is detected during the countdown, the electronic device powers off the touch panel. Alternatively, the electronic device powers off the touch panel when the delay duration Δx2 after the moment x1 expires (that is, at a moment x4).

In a possible case, the electronic device does not detect any one of the second events within the delay duration Δx2 after the moment x1, and therefore cannot determine that the electronic device is in a target state. The electronic device may power off the touch panel when obtaining a detection result. In other words, the electronic device may power off the touch panel at the moment x4 or slightly later than the moment x4.

In some possible scenarios, the touch panel of the electronic device is already in a power-off state before the electronic device enters a target state. In this case, the electronic device cannot obtain capacitance information detected by the touch panel in the target state.

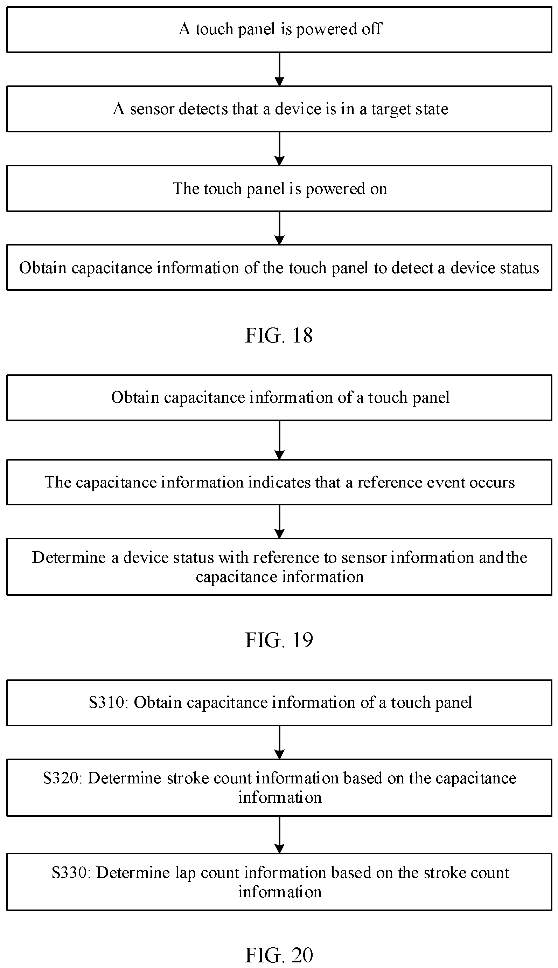

To resolve the foregoing problem, the electronic device may use another sensor to determine whether the electronic device is in a target state. If the electronic device determines that the electronic device is in a target state, the electronic device may power on the touch panel, to obtain the capacitance information detected by the touch panel. The following provides descriptions with reference to FIG. 17 and FIG. 18.

As shown in FIG. 17, at a moment x1 before the electronic device enters a target state, the electronic device has powered off the touch panel. For example, before a countdown of automatic power-off of the touch panel ends, no operation performed by the user on the electronic device is detected, and the electronic device powers off the touch panel. For another example, the electronic device powers off the touch panel in response to an operation (for example, a screen locking operation) of turning off a display by the user.

At a moment x2 after a moment x1, in response to an operation of the user, the electronic device enters a target state, for example, the electronic device enters water. Because the touch panel of the electronic device is powered off before the moment x2, the electronic device cannot determine, based on capacitance information detected by the touch panel, whether the electronic device is in a target state. In this case, in some examples, the electronic device may determine, with reference to detection information of another sensor, whether the electronic device is in a target state.

In some examples, the electronic device may determine, based on detection data of a barometer, whether the electronic device is in a target state.

For example, in response to a case in which the detection data of the barometer is greater than or equal to a preset pressure, the electronic device may determine that the electronic device is in a target state.

In some examples, the electronic device may determine, based on detection data of an ECG electrode, whether the electronic device is in a target state.

For example, in response to a case in which an electrical signal detected by the ECG electrode meets a preset requirement, for example, a strength of the electrical signal is greater than or equal to a preset strength, the electronic device may determine that the electronic device is in a target state.

In some examples, the electronic device may determine, with reference to the detection data of the barometer and the detection data of the ECG electrode, whether the electronic device is in a target state.

For example, in response to a case in which the detection data of the barometer is greater than or equal to the preset pressure and the strength of the electrical signal detected by the ECG electrode is greater than or equal to the preset threshold, the electronic device may determine that the electronic device is in a target state.

To obtain capacitance information of the electronic device in a target state, the electronic device may power on the touch panel in response to a sensor indicating that the electronic device is in a target state. In other words, at a moment x3 after the moment x2 in FIG. 17, the electronic device may power on the touch panel. Herein, the moment x3 may be considered as a moment same as the moment x2, or the moment x3 may be slightly later than the moment x2.

After the touch panel is powered on, the electronic device may obtain capacitance information of the touch panel, and determine a device status based on the capacitance information. For example, the electronic device detects whether the foregoing third event or fourth event occurs, and determines whether the electronic device is not in a target state.

In some scenarios, the electronic device may not be in a target state, but the capacitance information of the touch panel reflects that the electronic device is in a target state. In other words, in some scenarios, the capacitance information of the touch panel may be falsely reported. In this case, the electronic device may use an event indicated by the capacitance information of the touch panel as a reference event, and determine whether the electronic device is in a target state with reference to data information detected by another sensor. FIG. 19 is an example diagram of a method for determining a device status by an electronic device in a scenario in which a reference event occurs.

In some scenarios, the reference event may also be referred to as an abnormal event. For example, the reference event may include: A user presses a display of the electronic device for a long time, an ambient temperature increases, or the user powers on a touch panel in a target state.

For the reference event that the user presses the display of the electronic device for a long time (referred to as a reference event A), because a capacitance value detected by the touch panel after user's skin is in contact with the touch panel of the display also increases, and a case that the user presses the display for a long time may also trigger the electronic device to detect any one of the foregoing plurality of second events (for example, the distribution of the capacitance value meets the preset requirement), determining whether the device is in a target state based only on capacitance information of the touch panel may cause a misjudgment.

For the reference event that the ambient temperature increases (referred to as a reference event B below), the ambient temperature increase also causes the capacitance value detected by the touch panel to increase. Correspondingly, the electronic device may also detect any one of the foregoing second events (for example, the capacitance value variation of the touch panel within the preset duration meets the preset requirement). Therefore, in this case, determining whether the device is in a target state based only on capacitance information of the touch panel may also cause a misjudgment.

For the reference event that the user powers on the touch panel in a target state (referred to as a reference event C below), for example, the electronic device is in an immersion state, the touch panel is powered off, and the user powers on the touch panel by pressing a button. Because the device is already in a target state before the touch panel detects capacitance information, or in other words, the touch panel cannot detect a change process from a state in which the device is not in a target state to a state in which the device is in a target state, if whether the change of the capacitance value within the preset duration meets the preset condition is used as the second event, the touch panel of the electronic device may not detect the second event within the preset duration. Therefore, in this case, determining whether the device is in a target state based only on the capacitance information of the touch panel may also cause a misjudgment.

In a possible implementation, the electronic device may distinguish the plurality of reference events based on the capacitance information of the touch panel. For example, for the reference event A, the reference event B, and the reference event C, a capacitance value detected by the touch panel in the reference event C is greater, a capacitance value detected by the touch panel in the reference event A is smaller, and a capacitance value detected by the touch panel in the reference event B is between detection results of the foregoing two reference events. In view of this, the electronic device may use an average capacitance value detected at a plurality of detection sites on the touch panel as a basis for distinguishing the reference event A, the reference event B, and the reference event C.

In some examples, in response to a case in which the electronic device detects one or more of the reference events, the electronic device may determine, with reference to sensor information, whether the electronic device is in a target state.

For example, the sensor may include one or more of the following: a barometer, an ECG electrode, a temperature sensor, a gyroscope, an accelerometer, a temperature sensor, a magnetometer, or the like.

In some examples, in response to a case in which the electronic device detects the reference event A, the electronic device may determine, with reference to detection data of a barometer, whether the electronic device is in a target state. For example, if a pressure value detected by the barometer is greater than or equal to a preset pressure, the electronic device may determine that the electronic device is in a target state; or if the pressure value detected by the barometer is less than the preset pressure, the electronic device may determine that the electronic device is not in a target state.

In some examples, in response to a case in which the electronic device detects the reference event B, the electronic device may determine, with reference to detection data of the temperature sensor, whether the electronic device is in a target state. For example, if a temperature detected by the temperature sensor is within a preset temperature range (for example, about 23°C), the electronic device may determine that the electronic device is in a target state. If an increase amplitude of the temperature detected by the temperature sensor within a preset duration is greater than or equal to a preset threshold, the electronic device may determine that the electronic device is not in a target state.

In some examples, in response to a case in which the electronic device detects the reference event C, the electronic device may determine, with reference to detection data of the ECG electrode, whether the electronic device is in a target state. For example, if a strength of an electrical signal detected by the ECG electrode is greater than or equal to a preset strength, the electronic device may determine that the electronic device is in a target state; or if the strength of the electrical signal detected by the ECG electrode is less than the preset strength, the electronic device may determine that the electronic device is not in a target state.

In some examples, the electronic device may also determine, with reference to detection data of two or more of a plurality of sensors, whether the electronic device is in a target state.

A device status of the electronic device can reflect, to some extent, an activity status of the user of the electronic device. In other words, information about a sensor and capacitance information recorded by the electronic device can reflect, to some extent, the activity status of the user. For example, the electronic device may be a wearable device like a watch or a band. When a watch worn by the user is in an immersion state, the user wearing the watch may also be in an immersion state, for example, the user is swimming or diving.

Capacitance information of the touch panel of the wearable device can be analyzed to determine different activity states of the user in an activity process to some extent. The following uses a swimming scenario as an example to describe a swimming status detection method provided in embodiments of this application. FIG. 20 is a diagram of a method for detecting a swimming status of a user according to an embodiment of this application.

S310: In response to a swimming start operation, an electronic device obtains capacitance information of a touch panel.

Herein, the electronic device may be a wearable device like a watch or a band.

The touch panel may be a component of a display of the electronic device, and may be configured to implement a response of the electronic device to a touch operation of a user. The touch panel may be provided with a plurality of capacitance value detection sites, and a capacitance value of coupling capacitance generated in response to a touch operation of the user or the like may be detected at the capacitance value detection sites. For related descriptions of the touch panel, refer to the foregoing related descriptions. Details are not described herein again.

In some examples, the capacitance information may include one or more of the following: a capacitance value of the touch panel, a relationship between the capacitance value of the touch panel and time, or a distribution of the capacitance value of the touch panel. In some scenarios, the capacitance information may also be understood as including one or more of the following: a capacitance value of a detection site on the touch panel, a relationship between the capacitance value of the detection site on the touch panel and time, or a relationship between a position of the detection site and the capacitance value of the detection site on the touch panel.

The electronic device may use an operation of actively enabling a swimming status detection function by the user as the swimming start operation of the user. Alternatively, the electronic device may detect information such as a heart rate and an action of the user, to determine whether the user is swimming. A manner of determining whether swimming starts is described in detail below, and is not described herein.

S320: Determine stroke count information of the user in a swimming process based on the capacitance information.

A count of strokes (stroke count) in the swimming process may reflect swimming efficiency of the user to some extent. For a same swimming distance, a smaller count of strokes indicates a longer distance of a single stroke count of the user, and relatively, swimming efficiency is higher. Determining stroke count information of the user in the swimming process based on the capacitance information helps more accurately and reliably analyze a swimming activity of the user.

In some examples, the stroke count information may include one or more of the following: whether a current stroke count is valid, a count of valid strokes, a count of invalid strokes, or the like.

In the swimming process of the user, the electronic device worn on an arm of the user also continuously experiences switching between an out-of-water state and an immersion state as the arm of the user switches between an out-of-water state and an immersion state. The electronic device can determine an out-of-water duration, an immersion duration, an out-of-water quantity, an immersion quantity, and the like of the electronic device by obtaining the capacitance information of the electronic device. The electronic device can determine stroke count information in the swimming process of the user based on the information.

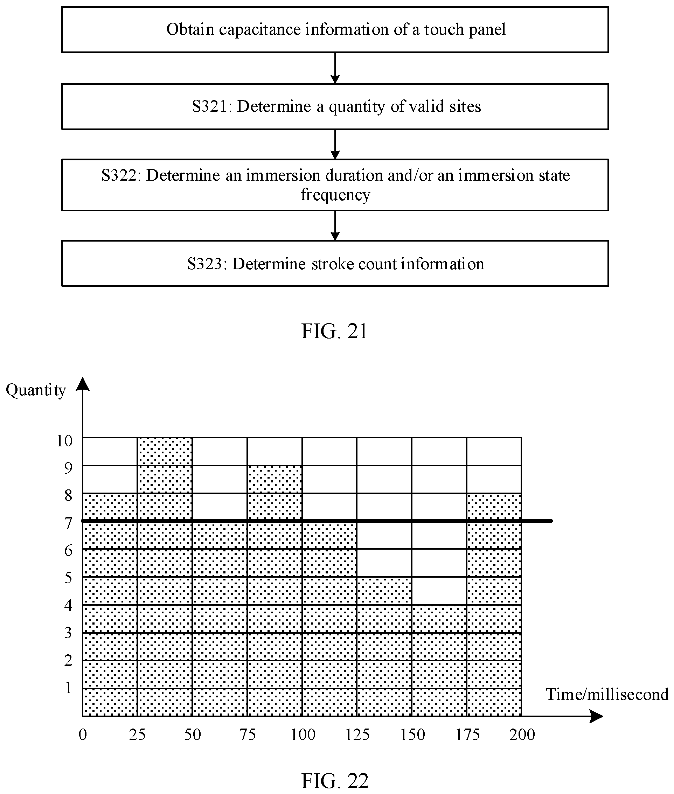

In some examples, the electronic device may determine the stroke count information in the swimming process of the user according to a method shown in FIG. 21.

S321: Determine a quantity of valid sites based on the capacitance information.

In some examples, the valid site may be a capacitive detection site whose capacitance value is greater than or equal to a preset capacitance value in capacitance values detected at all capacitance value detection sites on the touch panel.

Herein, the preset capacitance value may be a determined value, for example, 10 units, or the preset capacitance value may be a value determined based on an actual detection situation. For example, if a maximum capacitance value detected at all detection sites in a same batch is a, the preset capacitance value may be 0.7a, 0.8a, or the like.

In some examples, the electronic device may obtain the capacitance information of the touch panel a plurality of times within one stroke count periodicity. The following describes obtaining the capacitance information of the touch panel once as an obtaining frequency.

The foregoing valid sites may be all valid sites included in a plurality of obtaining frequencies within one stroke count periodicity, or the foregoing valid sites may be valid sites included in each obtaining frequency within one stroke count periodicity.

For example, the electronic device may determine that one stroke count periodicity is 200 milliseconds, and the capacitance information may be obtained every 25 milliseconds within the 200 milliseconds, that is, every 25 milliseconds is used as an obtaining frequency. In a possible case, a quantity of valid sites may be a quantity of valid sites included in the touch panel within every 25 milliseconds (or a frequency at which the capacitance information is obtained). In another possible case, the quantity of valid sites may be a quantity of valid sites included in the touch panel within 200 milliseconds (or within one stroke count periodicity).

FIG. 22 shows a case of a quantity of valid sites at each obtaining frequency in one stroke count information determining periodicity. In the figure, that a total quantity of capacitance value detection sites of the touch panel is 10 is used as an example. A quantity of valid sites within 0 ms to 200 ms is shown in the following table.

**Table 1**

| Obtaining frequency (ms) | 0-25 | 25-50 | 50-75 | 75-100 | 100-125 | 125-150 | 150-175 | 175-200 | Stroke count periodicity (0-200) |
|---|---|---|---|---|---|---|---|---|---|
| Quantity of valid sites (number) | 8 | 10 | 7 | 9 | 7 | 5 | 4 | 8 | 58 |

According to the table, if the quantity of valid sites is a quantity of valid sites included in the touch panel within every 25 milliseconds, the quantity of valid sites may be 8, 10, 7, 9, 7, 5, 4, or 8; or if the quantity of valid sites is a quantity of valid sites included in the touch panel within 200 milliseconds, the quantity of valid sites may be 58.

S322: Determine an immersion duration and/or an immersion state frequency based on the quantity of valid sites.

In some examples, the electronic device may determine, based on whether a quantity of valid sites included in each obtaining frequency within one stroke count periodicity is greater than or equal to a preset quantity, whether the frequency belongs to the immersion state frequency.

For example, in FIG. 22, the preset quantity used to determine whether the frequency belongs to the immersion state frequency may be 7. In this case, in eight obtaining frequencies within 0 milliseconds to 200 milliseconds, two frequencies 125 milliseconds to 150 milliseconds and 150 milliseconds to 175 milliseconds do not belong to the immersion state frequency, and remaining frequencies belong to the immersion state frequency. The immersion state frequency within the stroke count periodicity of 0 milliseconds to 200 milliseconds is 6.

In some examples, the electronic device may analyze a duration corresponding to each frequency to determine whether the duration corresponding to each frequency is valid, and then summarize the duration to determine a total valid duration included in one stroke count.

For example, the electronic device may determine a duration corresponding to a frequency with a quantity of valid sites is greater than or equal to a preset quantity as a valid duration.

For example, if the preset quantity is 7, a duration corresponding to a frequency with a quantity of valid sites is greater than or equal to 7 is the valid duration, and a duration corresponding to a frequency with a quantity of valid sites is less than 7 is an invalid duration. With reference to FIG. 22, in 0 milliseconds to 200 milliseconds, durations corresponding to eight frequencies in sequence are respectively: a valid duration, a valid duration, a valid duration, a valid duration, a valid duration, a valid duration, an invalid duration, an invalid duration, and a valid duration. Further, within 200 milliseconds, the valid duration determined based on the valid site may be estimated as 25 milliseconds×6=150 milliseconds.

In some examples, the electronic device may count a total quantity of valid sites in all frequencies included in one stroke count, and determine, based on the total quantity of valid sites, a valid duration included in the stroke count.

For example, in 0 milliseconds to 200 milliseconds, quantities of valid sites detected at an interval of 25 milliseconds are 8, 10, 7, 9, 7, 5, 4, and 8, respectively, and the total quantity of valid sites is 58. In this case, the total valid duration in the stroke count periodicity may be estimated based on the total quantity of valid sites as: 25 milliseconds/10×58=145 milliseconds.

S323: Determine the stroke count information based on the immersion duration and/or the immersion state frequency.

In some examples, for a stroke count periodicity that includes a quantity of valid sites greater than or equal to a preset quantity, the electronic device may determine that a stroke count is a valid stroke count. For a stroke count periodicity that includes a quantity of valid sites less than the preset quantity, the electronic device may determine that the stroke count is an invalid stroke count.

FIG. 22 is used as an example. Within one stroke count periodicity, a total quantity of valid sites is 58, and a preset threshold of the valid sites used to determine whether a stroke count is a valid stroke count may be 48. Because 58>48, that is, a quantity of valid sites in a current stroke count is greater than the preset quantity, a current stroke count is a valid stroke count.

In some examples, for a stroke count periodicity that includes an immersion duration greater than or equal to a preset duration, the electronic device may determine that a stroke count is a valid stroke count. For a stroke count periodicity that includes an immersion duration less than the preset duration, the electronic device may determine that the stroke count is an invalid stroke count.

FIG. 22 is still used as an example. The immersion duration included in the current stroke count periodicity is 145 milliseconds or 150 milliseconds, and the threshold of the preset duration used to determine whether the stroke count periodicity is a valid stroke count periodicity may be 120 milliseconds. Because 145 milliseconds>120 milliseconds, that is, the immersion duration included in the current stroke count periodicity is longer than the preset duration, a current stroke count is a valid stroke count.

In some examples, for a stroke count periodicity that includes an immersion state frequency greater than or equal to a preset quantity of times, the electronic device may determine that a stroke count is a valid stroke count. For a stroke count periodicity that includes an immersion state frequency less than the preset quantity of times, the electronic device may determine that the stroke count is an invalid stroke count.

FIG. 22 is still used as an example, an immersion state frequency included in a current stroke count is 6, and a threshold that is of the immersion state frequency and that is used to determine whether a stroke count is a valid stroke count may be 5. Because 6>5, that is, the immersion state frequency included in the current stroke count periodicity is greater than the preset quantity, the current stroke count is a valid stroke count.

S330: Determine lap count information based on the stroke count information in the swimming process of the user.

A lap count (lap count) can be used to measure a swimming distance of the user. With reference to time information, the lap count can reflect exercise performance of the user in one swimming activity, and reflect a physical condition and physical fitness change of the user.

In some examples, the lap count information may include one or more of the following: a count of valid laps, a count of invalid laps, a count of valid strokes included in the valid lap count, and the like.

In some examples, the electronic device may determine whether a current lap is a valid lap based on whether a count of valid strokes included in the current lap is greater than or equal to a preset count.

Herein, the preset count of valid strokes used to determine whether the current lap is valid may be determined based on existing swimming experience data, or may be determined based on historical data of a swimming activity of the user.

For example, for a 25-m lane, an existing data record indicates that a minimum count of strokes is 4. In this case, the preset count may be 4.

For example, the preset count may be calculated according to an empirical formula. The empirical formula may be represented as follows: Preset count=Lane length×p, where p in the formula is an empirical constant, and may be determined based on data statistics. For example, a value of the empirical constant p may be 0.15<p<0.35. If a value range is substituted into the empirical formula, for the 25-m lane, a value of the preset count may be between 4 and 9.

For example, the electronic device may collect statistics on historical data of the user swimming for a plurality of times, to determine the preset count. For example, the electronic device records that an average minimum count of strokes of the user in the 25-meter lane in a first five swimming processes is 10. The electronic device may convert the average minimum count of strokes based on the historical data, and use the converted average minimum count of strokes as an updated preset minimum count of strokes. For example, the updated preset minimum count of strokes may be 4, 5, or the like.

For example, the electronic device may further determine the preset count of valid strokes based on a total count of strokes of the user detected in the current lap. For example, a value of the preset count may be 0.6×total count of strokes or 0.7×total count of strokes.

For example, if the electronic device detects that the total count of strokes of the user in the current lap is 10, the preset count of valid strokes may be 6 or 7.

In some examples, the electronic device may determine whether the current lap is a valid lap based on whether a total immersion duration included in the current lap is greater than or equal to a preset duration.

For example, the electronic device may separately collect statistics on immersion durations of a total count of strokes included in the current lap, and sum up the immersion durations of the total count of strokes to obtain the total immersion duration of the current lap.

In some examples, when determining that the current lap is a valid lap, the electronic device may update data of swimming exercise of the user, for example, perform an operation of "Valid lap count+1". Correspondingly, in response to an operation of viewing swimming data by the user, the electronic device may update content of a user interface used to display a count of laps of the user.

In some examples, when determining that the current lap is not a valid lap, the electronic device may not perform a swimming data update operation. Correspondingly, when the user views a user interface used to display a count of swimming laps of the user, lap count information on the user interface does not change. In this case, the electronic device may prompt the user that a total immersion duration or a total count of valid strokes of a current lap does not meet a requirement. For example, the electronic device may display prompt information "The total immersion duration of the current lap has not reached the target yet. Please keep going!".

To improve efficiency of updating exercise information by the electronic device, and enable the user to view various data of swimming in a timely manner, the electronic device may preprocess lap count information in a process of swimming by the user. A preprocessed result may be directly updated and displayed on the user interface of the electronic device, and after the swimming of the user ends, post-processing is performed on swimming data based on overall data in the swimming process, to improve user experience.

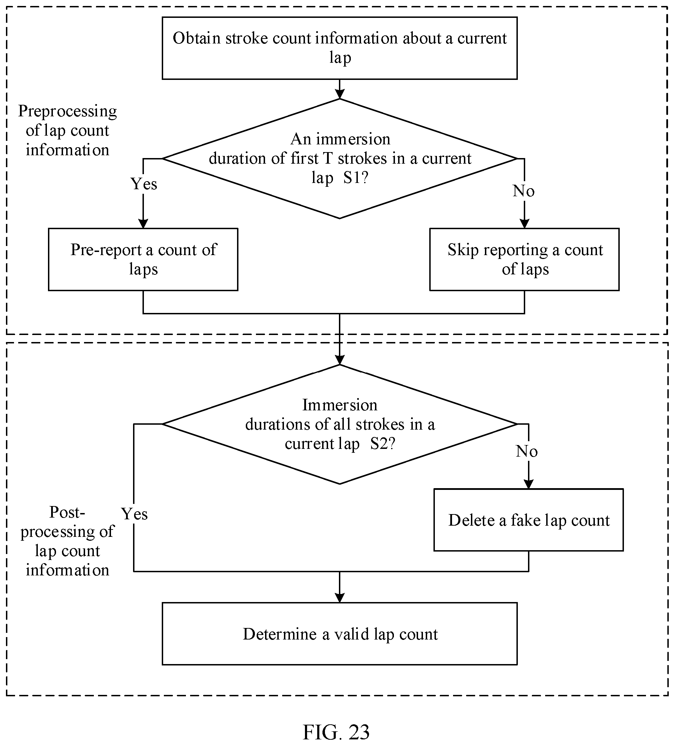

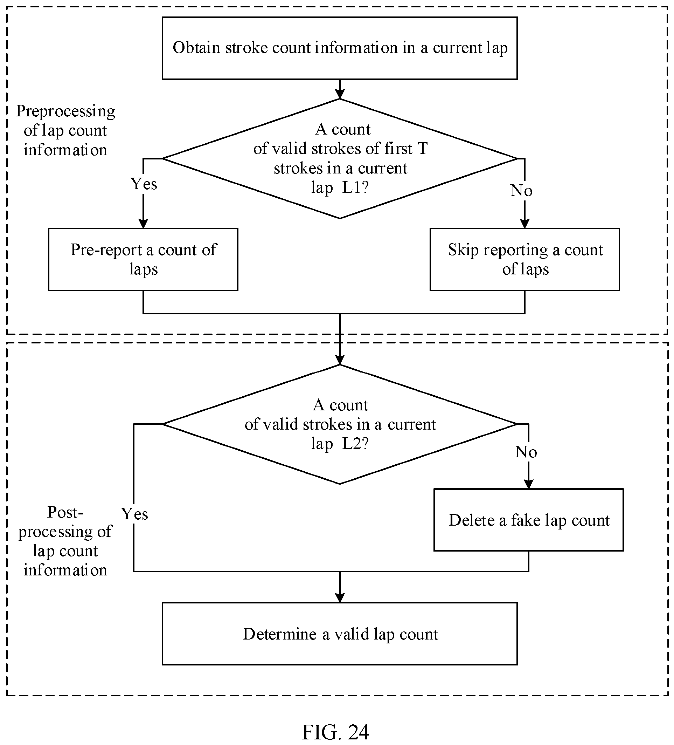

According to different bases for determining whether a lap count is valid, FIG. 23 and FIG. 24 show two solutions. In the solution shown in FIG. 23, whether an immersion duration of a current lap meets a requirement is used as a basis. In the solution shown in FIG. 24, whether a valid stroke count of the current lap meets a requirement is used as a basis.

In some examples, the electronic device may use a same determining basis to perform preprocessing and post-processing on the lap count information, that is, as shown in the solution in FIG. 23 or FIG. 24. In some examples, the electronic device may use different determining bases when preprocessing and post-processing the lap count information. For example, in a preprocessing phase, the electronic device may use whether an immersion duration of a current lap meets a requirement as a determining basis, and in a post-processing phase, the electronic device may use whether a valid stroke count of the current lap meets a requirement as a determining basis. For another example, in the preprocessing phase, the electronic device may use whether the valid stroke count of the current trip meets a requirement as a determining basis, and in a post-processing phase, the electronic device may use whether the immersion duration of the current trip meets a requirement as a determining basis. FIG. 23 and FIG. 24 are merely examples for description, and should not be considered as a limitation on this application.

As shown in FIG. 23, in a preprocessing phase of the lap count information, if the electronic device detects that an immersion duration included in first T strokes in a current lap is greater than or equal to S1, the electronic device may preset the current lap as a valid lap, so that the electronic device may update the lap count information on a user interface, for example, display "Valid lap count+1". If the electronic device detects that the immersion duration included in the first T strokes in the current lap is less than S1, the electronic device may preset the current lap as an invalid lap, and the electronic device may not update the lap count information on the user interface.

In a post-processing phase of the lap count information, based on processing in the preprocessing phase of the lap count information, the electronic device may obtain immersion durations of a total count of strokes in each lap. For a lap that has been preset as a valid lap, if it is determined that a total immersion duration in the lap is greater than or equal to S2, the electronic device may determine that the lap is a valid lap. If it is determined that the total immersion duration in the lap is less than S2, the electronic device may cancel presetting of the lap as a valid lap, determine that the lap is not a valid lap (for example, referred to as a false lap), and perform an operation of reducing a total count of valid laps of the current swimming by one.

In the foregoing solution, T may be a positive integer. For example, T=5. Values of S1 and S2 may meet that S2 is greater than S1.

In the solution shown in FIG. 24, in a preprocessing phase of the lap count information, if the electronic device detects that a count of valid strokes of first T strokes in a current lap is greater than or equal to L1, the electronic device may preset the current lap as a valid lap, so that the electronic device may update the lap count information on a user interface, for example, display "Valid lap count+1". If the electronic device detects that the count of valid strokes of the first T strokes in the current lap is less than S1, the electronic device may preset the current lap as an invalid lap, and the electronic device may not update the lap count information on the user interface.

In a post-processing phase of the lap count information, based on processing in the preprocessing phase of the lap count information, the electronic device may obtain a count of all valid strokes included in each lap. For a lap that has been preset as a valid lap, if it is determined that a count of all valid strokes in the lap is greater than or equal to L2, the electronic device may determine that the lap is a valid lap. If it is determined that the count of all valid strokes in the lap is less than S2, the electronic device may cancel presetting of the lap as a valid lap, determine that the lap is not a valid lap (for example, referred to as a false lap), and perform an operation of reducing a total count of valid laps of current swimming by one.

In the foregoing solution, T may be a positive integer. For example, T=5. Values of L1 and L2 may meet that L2 is greater than L1.

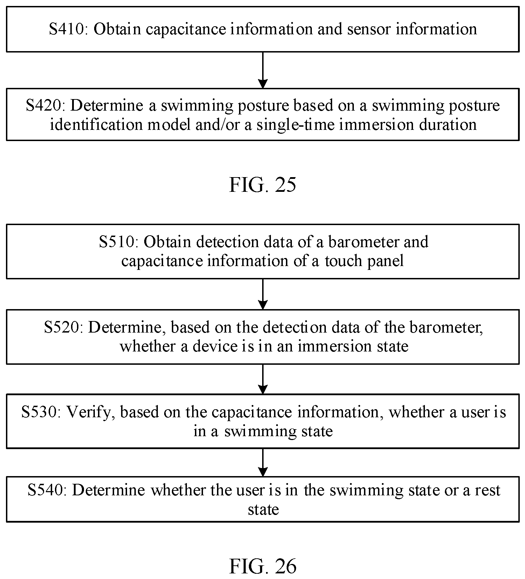

To more accurately and reliably identify a swimming posture of the user in the swimming process, in some examples, the electronic device may determine the swimming posture of the user with reference to capacitance information detected by an accelerometer, a gyroscope, and a touch panel. FIG. 25 is a diagram of a method for determining a swimming posture of a user based on capacitance information according to an embodiment of this application.

S410: Obtain the capacitance information and sensor information.

Herein, the capacitance information refers to a capacitance value, time, or position information detected at a capacitance value detection site of a touch panel of an electronic device, and an association relationship between the information. Specifically, the capacitance information may include one or more of the following: a capacitance value of the touch panel, a relationship between the capacitance value of the touch panel and time, or a distribution of the capacitance value of the touch panel. Alternatively, the capacitance information may also be understood as including one or more of the following: a capacitance value of a detection site on the touch panel, a relationship between the capacitance value of the detection site on the touch panel and time, or a relationship between a position of the detection site and the capacitance value of the detection site on the touch panel.

The sensor information may include data information detected by one or more sensors on the electronic device. The sensors include but are not limited to an accelerometer, a gyroscope, a magnetometer, a barometer, or a heart rate sensor (for example, an ECG electrode).

The capacitance information of the touch panel may be used to determine an out-of-water duration and an immersion duration of the device in one swimming posture in a swimming process. Because different swimming postures correspond to different out-of-water durations and immersion durations, the capacitance information may be used to improve swimming posture identification accuracy to some extent.

The accelerometer may be used to obtain acceleration changes of the electronic device in a plurality of directions in three-dimensional space. The acceleration changes may be used to determine stroke movement of the user's arm and leg, leg kicking actions, and body oscillations in a swimming process. Based on this, data information detected by the accelerometer in the swimming process may be used to improve swimming posture identification accuracy of the electronic device.

The gyroscope may be configured to measure information such as an angular velocity at which a wrist or another body part of the user rotates around different axes, to help distinguish different rotation and swing modes in different swimming postures.

The magnetometer can be used to determine a movement direction of the user in a swimming process. With reference to detection data of the accelerometer and gyroscope, the magnetometer can also be used to determine a user's posture changes in a turning state in the swimming process.

The barometer can be used to determine a change in a depth of the device underwater in the swimming process. The heart rate sensor may be used to detect a change in a heart rate of the user in the swimming process. In some scenarios, for different swimming postures, the heart rate of the user may be different.

During swimming posture identification, the electronic device may make a comprehensive judgment with reference to the detection data of one or more of the foregoing sensors, to improve accuracy and reliability of swimming posture identification.

S420: Determine a swimming posture based on a swimming posture identification model and/or a single-time immersion duration.

In some examples, model training may be performed based on data detected by the touch panel and different sensors in the swimming process, to construct the swimming posture identification model. In an actual swimming posture identification process, the electronic device may input the capacitance information and the sensor information obtained in S410 into the swimming posture identification model, and determine the swimming posture of the user based on an output result of the swimming posture identification model.

For example, input data used for training the swimming posture identification model may include detection data of an accelerometer, detection data of a gyroscope, and capacitance information of a touch panel.

The detection data of the accelerometer may include values of accelerations in a plurality of directions and a correspondence between the values of the accelerations and time. For example, the detection data of the accelerometer may include a value of an acceleration in a first direction, a value of an acceleration in a second direction, and a value of an acceleration in a third direction. Any two of the first direction, the second direction, and the third direction may be perpendicular to each other.

Similarly, the detection data of the gyroscope may include values of angular velocities rotated around a plurality of axial directions and a correspondence between these values of angular velocities and time. For example, the detection data of the gyroscope may include a value of an angular velocity of rotation around a first axis, a value of an angular velocity of rotation around a second axis, and a value of an angular velocity of rotation around a third axis, and any two of the first axis, the second axis, and the third axis may be perpendicular to each other.

In a possible implementation, before model training is performed, the detection data of the accelerometer, the detection data of the gyroscope, and the capacitance information of the touch panel may be preprocessed. For example, different types of data are aligned based on a time relationship.

In a possible implementation, termination of the model training may be controlled by setting a loss function and accuracy.

In a swimming posture identification scenario, in response to a request of the user for identifying a swimming posture, the electronic device may input the accelerometer detection data, the gyroscope detection data, and the capacitance information that are detected in one swimming activity of the user into a trained swimming posture identification model, to determine a swimming posture identification result.

In some examples, the electronic device may determine, based on the capacitance information, the immersion duration and the out-of-water duration in the swimming process, and identify, based on the immersion duration and the out-of-water duration, a swimming posture (breaststroke) that needs to be in an immersion state for long time. If it is determined that a swimming posture of the user does not belong to the breaststroke, swimming posture identification may be further performed with reference to detection data of other sensors such as an accelerometer and a gyroscope.

For example, the electronic device may determine a single-time immersion duration based on the capacitance information. If the single-time immersion duration is greater than or equal to a preset duration, the electronic device may determine that the swimming posture of the user is the breaststroke. If the single-time immersion duration is less than the preset duration, the electronic device may further obtain detection data of sensors such as an accelerometer and a magnetometer, and identify, with reference to the detection data of the sensors, that the swimming posture of the user is any one of backstroke, freestyle, butterfly, or the like.

The single-time immersion duration may be understood as a time interval between first immersion of an arm and a next out-of-water of the arm in a swimming process (namely, a duration in which the arm of the user is kept in water). In some scenarios, the single-time immersion duration may also be understood as time from a start of an immersion state to an end of the immersion state of an electronic device worn by the user. In a possible implementation, the electronic device may determine motion features such as a stroke frequency, an action periodicity, a body posture, and a rotation mode of the user in a swimming process based on detection data of sensors such as an accelerometer and a magnetometer. The electronic device may determine a swimming posture of the user based on the features.

In some examples, the electronic device may identify a swimming posture of the user in a single lap, or the electronic device may identify a swimming posture of the user in an entire swimming activity. When the electronic device identifies a swimming posture of the user in an entire swimming activity, the electronic device may determine that the swimming posture of the user in each lap of swimming is identified separately, and then determine whether there is a dominant swimming posture in a plurality of laps of swimming. If there is a dominant swimming posture, the electronic device determines that the swimming posture of the user in this swimming activity is the dominant swimming posture. Otherwise, the electronic device may determine that the swimming posture of the user in this swimming activity is a mixed swimming posture.

The dominant swimming posture may be understood as that a swimming distance of the swimming posture accounts for a high proportion of a total swimming distance or a swimming duration of the swimming posture accounts for a high proportion of a total swimming duration.

In a swimming process, a barometric hole of the barometer that is configured to detect pressure may be blocked by water flow disturbance, and detection data of the barometer may be abnormal. For example, when the user is resting on a shore, detection data of the barometer still indicates that the user is in immersion state due to barometric hole blockage.

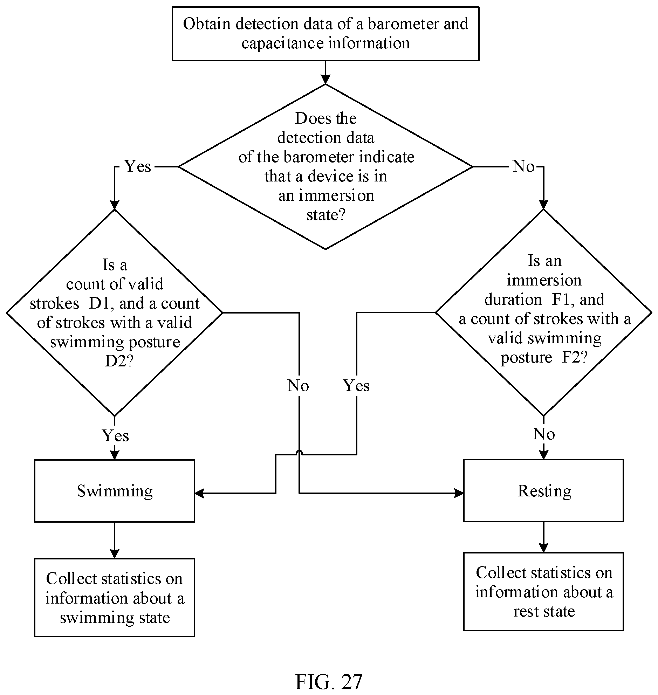

To more accurately and reliably determine whether the user is in a swimming state or a rest state in the swimming process, the electronic device may make a joint judgment with reference to the detection data of the barometer and the capacitance information of the touch panel. FIG. 26 and FIG. 27 are diagrams of another method for detecting a swimming status of a user according to an example.

S510: The electronic device obtains the detection data of the barometer and the capacitance information of the touch panel.

Herein, the detection data of the barometer may be a pressure value detected by the barometer and a relationship between the pressure value and time.

For example, the pressure data of the standard atmospheric pressure detected by the barometer is about 100 kPa. When the barometer is immersed in water, data detected by the barometer increases by about 100 kPa each time a water depth increases by 1 meter. For example, a value of data detected by the barometer at a depth of 2 meters underwater is about 300 kPa.

The capacitance information is related information about a capacitance value detected by the touch panel, and may include one or more of the following: a capacitance value of the touch panel, a relationship between the capacitance value of the touch panel and time, or a distribution of the capacitance value of the touch panel. A plurality of capacitance value detection sites may be set on the touch panel. In some scenarios, the foregoing capacitance information may also be understood as including one or more of the following: a capacitance value of a detection site on the touch panel, a relationship between the capacitance value of the detection site on the touch panel and time, or a relationship between a position of the detection site and the capacitance value of the detection site on the touch panel.

S520. Determine, based on the detection data of the barometer, whether the device is in an immersion state.

In some examples, whether the device is in an immersion state may be determined based on whether the detection data of the barometer meets a preset condition.

For example, the electronic device may obtain a pressure value detected by the barometer within a preset duration, and determine, based on whether the pressure value within the preset duration meets a preset requirement, whether the device is in an immersion state.

For example, the electronic device may obtain a pressure value detected by the barometer within 3 seconds. If all pressure values detected by the barometer within 3 seconds are less than 200 kPa, the electronic device may determine that the electronic device is in an out-of-water state; otherwise, the electronic device may determine that the electronic device is in an immersion state.

S530: Verify, based on the capacitance information, whether the user is in a swimming state.

With reference to FIG. 27, based on different determining results in S520, the electronic device may determine a swimming status of the user based on the capacitance information and different determining bases.

In some examples, in S520, when the barometer indicates that the device is in an immersion state, the electronic device may determine, based on the capacitance information, whether a count of valid strokes and/or a quantity of valid swimming postures generated by the user meet a preset requirement, and when the count of valid strokes and/or the quantity of valid swimming postures meet the preset requirement, the electronic device may determine that the user is in a swimming state. When the count of valid strokes and/or the quantity of valid swimming postures do/does not meet the preset requirement, the electronic device may determine that the user is in a rest state.

For example, when the detection data of the barometer indicates that the device is in an immersion state, if the capacitance information indicates that a detected count of valid strokes is greater than or equal to D1, and a count of strokes with a valid swimming posture is greater than or equal to D2, the electronic device may determine that the user is in a swimming state; otherwise, the electronic device may determine that the user is in a rest state.

In some examples, in S520, when the barometer indicates that the device is in an out-of-water state, the electronic device may determine, based on the capacitance information, whether the immersion duration of the device within the preset duration meets the preset requirement, and/or whether a count of strokes with a valid swimming posture in a latest plurality of strokes meets the preset requirement. If both the immersion duration and the count of strokes with the valid swimming posture meet the preset requirement, the electronic device may determine that the user is in a swimming state; otherwise, the electronic device may determine that the user is in a rest state.

For example, when the detection data of the barometer indicates that the device is in an out-of-water state, if the capacitance information indicates that the out-of-water duration of the device is greater than or equal to F1, and a count of strokes with a valid swimming posture in latest P strokes is greater than or equal to F2, the electronic device may determine that the user is in a swimming state; otherwise, the electronic device may determine that the user is in a rest state.

In some examples, the valid swimming posture may be any one of breaststroke, butterfly, backstroke, or freestyle. In other words, in one stroke count, if the electronic device can identify that a swimming posture of the user is any one of breaststroke, butterfly, backstroke, or freestyle, the electronic device may determine that the stroke count is considered as a stroke count with a valid swimming posture.

S540: Determine whether the user is in the swimming state or a rest state.

The electronic device may comprehensively determine, with reference to the detection data of the barometer and the capacitance information, whether the user is in a swimming state or a rest state.

In some examples, if the barometer indicates that the device is in an immersion state, and the capacitance information indicates that the user is in a swimming state, the electronic device may determine that the user is in a swimming state.

In some examples, if the barometer indicates that the device is in an out-of-water state, and the capacitance information indicates that the user is in a swimming state, the electronic device may determine that the user is in a swimming state. In this case, the barometer may be in a failure state, for example, the barometer is blocked.

In some examples, the barometer indicates that the device is in an immersion state, and the capacitance information indicates that the user is in a rest state. In this case, the electronic device may determine that the user is in a rest state, or that the user is in an immersion state without swimming.

In some examples, if the barometer indicates that the device is in an out-of-water state, and the capacitance information indicates that the user is in a rest state, the electronic device may determine that the user is in a rest state.

When the electronic device determines, with reference to the detection data of the barometer and the capacitance information, that the user is in a swimming state, the electronic device may collect statistics on information about the swimming state of the user, for example, a swimming duration, the foregoing stroke count information, the foregoing lap count information, or a swimming posture.

When the electronic device determines, with reference to the detection data of the barometer and the capacitance information, that the user is in a rest state, the electronic device may collect statistics on information about the rest state of the user, but does not collect statistics on swimming status information. For example, the electronic device may collect statistics on the rest duration of the user, but does not record or collect statistics on information related to a count of strokes, a count of laps, and a swimming posture in a time period.

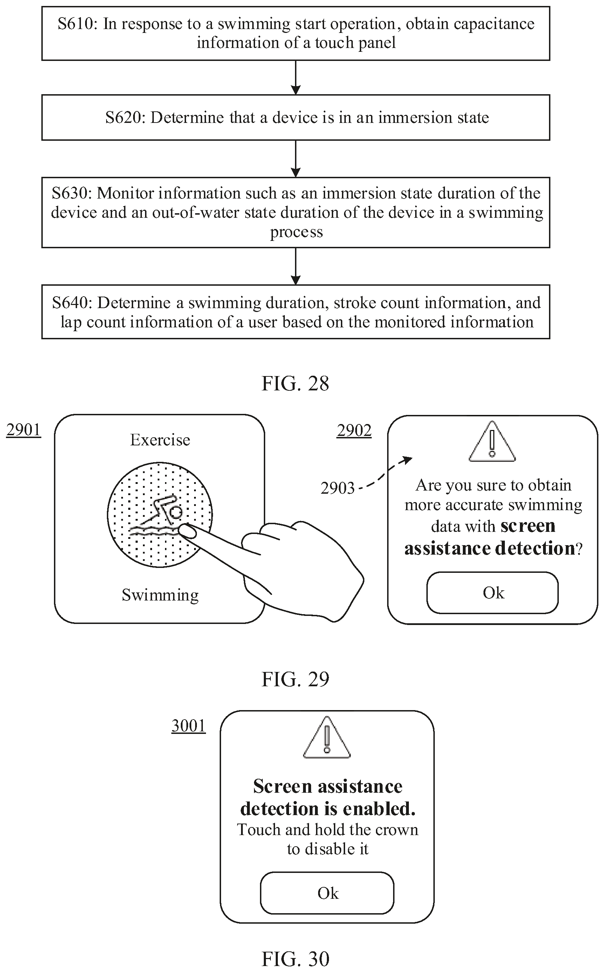

Based on a similar principle, an embodiment of this application further provides a swimming status detection method. In a swimming process, an electronic device may obtain capacitance information of a touch panel. Based on the capacitance information, the electronic device may determine a status of the electronic device, for example, whether the electronic device is in an immersion state. Based on this, the electronic device may determine a swimming duration, stroke count information, and the like of a user based on information such as an immersion state duration and an out-of-water state duration of the device, and the following provides descriptions with reference to FIG. 28 to FIG. 35.

S610: In response to a swimming start operation, an electronic device obtains capacitance information of a touch panel.

In some examples, the electronic device may display a first user interface 2901 shown in a left figure in FIG. 29. The first user interface 2901 may also be referred to as a sports mode selection interface. In response to an operation of selecting a "swimming" sports mode by a user on the first user interface 2901, the electronic device may display a second user interface 2902 shown in a right figure in FIG. 29. The second user interface 2902 may display first prompt information 2903. The first prompt information 2903 may indicate the user to enable a function of auxiliary detection of a swimming status by using the touch panel. For example, the first prompt information 2903 may be: "Obtain more accurate swimming data with screen assistance?". In response to a user's confirmation operation on the first prompt information, the electronic device may start to obtain the capacitance information of the touch panel. In response to a user's cancellation operation on the first prompt information, the electronic device does not obtain the capacitance information of the touch panel, or the electronic device does not determine swimming data of the user based on the capacitance information.

In some examples, the user starts swimming without selecting the "swimming" exercise mode. In this case, the electronic device may obtain the capacitance information of the touch panel to determine whether the device is in an immersion state (for a specific determining manner, refer to the foregoing description of determining whether the device is in a target state), and then determine, with reference to one or more of an accelerometer, a gyroscope, a magnetometer, a barometer, and the like, whether the user may be in a swimming state. When determining that the user may be in a swimming state, the electronic device may display second prompt information 3001 shown in FIG. 30. The second prompt information 3002 is used to inform the user that a function of detecting the swimming status by using the touch panel is enabled.

In some scenarios, obtaining the capacitance information of the touch panel of the electronic device may be understood as that the electronic device may obtain the capacitance information in response to an active enabling operation of the user, or the electronic device may automatically obtain the capacitance information after determining a general motion status of the user.

The capacitance information is information such as capacitance values detected by a plurality of capacitance value detection sites on the touch panel. For detailed descriptions of the capacitance information, refer to the foregoing related descriptions. Details are not described herein again.

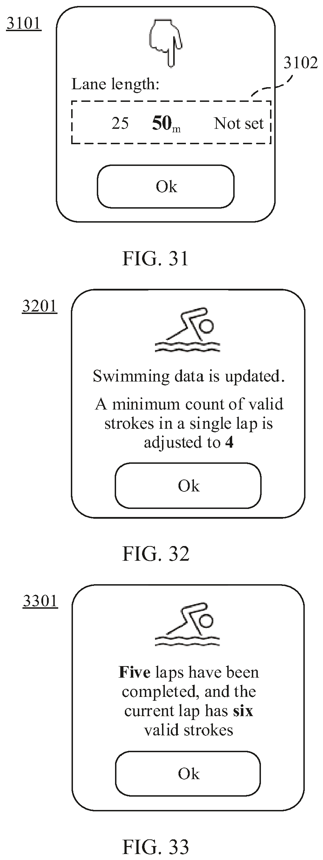

In some examples, in response to a swimming start operation of the user, the electronic device may further display a third user interface 3101 shown in FIG. 31. The third user interface 3101 may indicate the user to enter a lane length. For example, the third user interface 3101 may include a lane length selection control 3102, and a plurality of lane length options may be set on the lane length selection control 3102, for example, "25 m", "50 m", or "not set". In response to a leftward/rightward sliding operation of the user, the electronic device may determine the lane length selected by the user.

In response to an operation of selecting the "25 m" or "50 m" option by the user, the electronic device may set the lane length to 25 meters or 50 meters. In a subsequent swimming process, the electronic device may also collect statistics on swimming information of the user based on the set lane length. For example, as described above, a minimum value of a stroke count is determined based on the lane length, to determine whether a single swimming lap of the user is a valid lap.

In response to an operation of selecting the "not set" option by the user, the electronic device may set the lane length to a to-be-determined value. In a possible implementation, the electronic device may determine the to-be-determined value based on data monitored in a swimming process of the user.

S620: The electronic device determines, based on the capacitance information, whether the electronic device is in an immersion state.

In some examples, the electronic device may determine, based on the capacitance information, whether a first event and a second event are detected. If determining that the first event and the second event are detected, the electronic device may determine that the electronic device is in an immersion state.

For detailed descriptions of the first event and the second event, refer to the related descriptions in S120 and the like in the foregoing. Details are not described herein again.

S630: The electronic device monitors information such as an immersion state duration of the device and an out-of-water state duration of the device in the swimming process.

In some examples, the electronic device may monitor status information of the device in the swimming process. The status information may include one or more of the following: an immersion state duration of the device, an out-of-water state duration of the device, an immersion state frequency of the device, or an out-of-water state frequency of the device.

In a possible implementation, when the electronic device is in an immersion state, the electronic device may determine whether the device is in an out-of-water state in the manner described in S210 to S230, that is, determine whether the device is in an out-of-water state by detecting whether a third event and/or a fourth event occur. From time when the device determines that the device enters an immersion state to time when the device determines that the device enters an out-of-water state, the time period may be used as an immersion state duration of the electronic device.

In a possible implementation, when the electronic device is in an out-of-water state, the electronic device may determine, in the manner described in S110 to S130, whether the device is in an immersion state, that is, determine whether the device is in an immersion state by detecting whether the first event and the second event occur. From time when the device determines that the device enters an out-of-water state to time when the device determines that the device enters an immersion state, the time period may be used as a duration in which the electronic device is in an out-of-water state.

In a swimming process, the electronic device may continuously detect information such as an immersion state duration and an out-of-water state duration. The information may be used to update some information that needs to be used in the swimming process of the user after being processed and analyzed, or the information may be used to reflect, after the user finishes swimming, various indicators of the user in this swimming process after being processed and analyzed.

S640: The electronic device determines a swimming duration, stroke count information, and lap count information of the user based on the monitored information.

In some examples, the electronic device may determine swimming status information of the user based on the monitored device status information. The swimming status information may include one or more of the following: a swimming posture, whether the user is in a swimming state, stroke count information, or lap count information.

In a swimming process, the user uses arms and the like to move, and a band, a watch, and the like worn on the arms repeatedly undergo an immersion event and an out-of-water event. In other words, in a swimming process of the user, the electronic device like the band or the watch keeps switching between an immersion state and an out-of-water state. By monitoring, recording, and analyzing information such as an immersion state duration and an out-of-water state duration of the device in the swimming process of the user, a plurality of pieces of swimming data in the swimming process of the user may be roughly obtained through analysis.

For example, in a solution of identifying a swimming posture of the user (as shown in the foregoing S410 and S420), the swimming posture of the user may be roughly determined as breaststroke by analyzing a time interval between an immersion event and an out-of-water event of the electronic device that are adjacent, that is, analyzing a duration of the electronic device in an immersion state.

For another example, in a solution of determining whether a stroke count of the user is valid (refer to related content of S321 to S323 in the foregoing), whether a current stroke count is a valid stroke count may be determined by analyzing whether the immersion duration or the frequency of being in an immersion state of the electronic device in one stroke count meets a preset requirement. Based on this, the electronic device may further determine whether a current lap is a valid lap based on whether a single lap of swimming includes a count of sufficient valid strokes.

For another example, in the solution (as shown in the foregoing S510 to S540) of determining whether the user is in a swimming state with reference to the detection data of the barometer, whether the user is in an immersion state may be determined by verifying information such as a count of valid strokes and an immersion state duration of the device.

In some examples, the electronic device may determine, based on the detected immersion state duration of the device and the detected out-of-water state duration of the device that are in first several laps of the user's swimming process, a minimum count of strokes for the user to complete each lap of swimming. In a subsequent lap count of the swimming process, the electronic device may determine, based on the re-determined minimum count of strokes, whether a single lap of swimming by the user is a valid lap.

For example, in a swimming process, the electronic device may record an average minimum count of strokes of the user in a single swimming lap in first three laps as 10, and display a fourth user interface 3201 shown in FIG. 32. The fourth user interface 3201 may be used to inform the user that the minimum count of strokes in a single swimming lap is updated to 4 or 5. The updated minimum count of strokes may be obtained by converting the average minimum count of strokes in the first three laps of the user.

In a possible implementation, in response to a confirmation operation of the user, when subsequently determining whether a single swimming lap of the user is a valid lap, the electronic device may use a minimum valid stroke count of 6 as a determining condition.

In some examples, the electronic device may update swimming lap count information of the user by monitoring information such as an immersion state duration of the device and an out-of-water state duration of the device in a completed swimming lap in the swimming process of the user, that is, perform preprocessing on the lap count information in the foregoing embodiment.

For example, after detecting that the user has completed four swimming laps but has not completed five swimming laps, the electronic device continuously monitors information such as an immersion state duration of the device and an out-of-water state duration of the device. In response to information indicating that the immersion state duration of the device is greater than a preset duration in T strokes, the electronic device may determine that the user is performing a fifth swimming lap, and further update, in advance, information about a lap count that is completed by the user. In other words, the electronic device may display a fifth user interface 3301 shown in FIG. 33. The fifth user interface 3301 may indicate that the user completes five swimming laps. In other words, the electronic device can update the swimming lap count information of the user in advance.

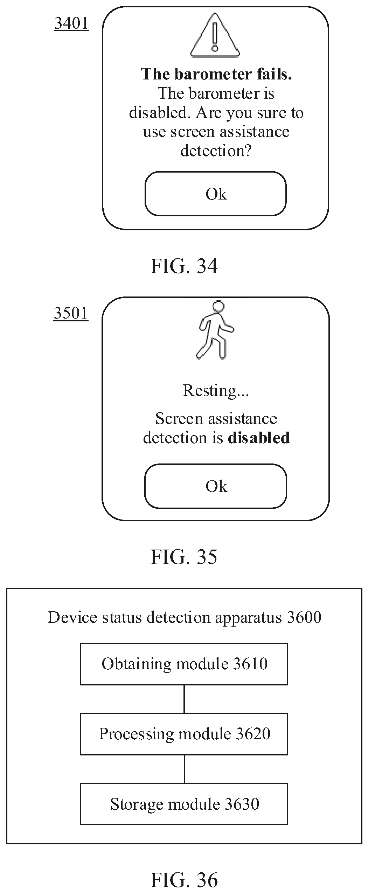

In some examples, in a process in which the electronic device determines a swimming status of the user with reference to the detection data of the barometer and the capacitance information of the touch panel, if the detection data of the barometer indicates that the device is in an out-of-water state, and the electronic device determines, by continuously monitoring information such as the immersion state duration of the device and the out-of-water state duration of the device, that the user is in a swimming state, the electronic device may determine that the barometer is in an invalid state. In this case, for example, the electronic device may display a sixth user interface 3401 shown in FIG. 34. The sixth user interface 3401 may be used to inform the user that the barometer is invalid, and the device disables the barometer.

In a possible implementation, in response to a confirmation operation of the user, the electronic device may disable the barometer and enable a function of assisting in detecting a swimming status by using the touch panel in a subsequent swimming process.

In some examples, the electronic device may determine, based on information such as an immersion state duration of the device and an out-of-water state duration of the device, that the user is in a rest state. In this case, to reduce energy consumption of the electronic device and prolong a use duration of the electronic device, the electronic device may display a seventh user interface 3501 shown in FIG. 35. The seventh user interface 3501 may be used to inform the user that the user is currently in a rest state, and a function of detecting the swimming status with screen assistance is disabled.

In a possible implementation, in response to a confirmation operation of the user, the electronic device may immediately power off the touch panel, or power off the touch panel of the electronic device after a preset duration.

It should be noted that, because the user may be in a motion state, to better implement interaction between the user and the electronic device, the confirmation operation of the user may include both an operation of tapping an "Ok" button on the user interface by the user and an event that the electronic device does not detect tapping the "Ok" button on the user interface by the user within a preset duration.

It should be further noted that, because the user may be in a motion state, to better remind the user and implement interaction between the user and the electronic device, when the user interface of the electronic device changes, the electronic device may further vibrate or ring to remind the user.

FIG. 36 shows a device status detection apparatus 3600 according to an embodiment of this application. The apparatus 3600 may have the function of the electronic device configured to detect a device status in the foregoing method embodiment, and may be configured to perform steps performed by the function of the electronic device in the foregoing method embodiment. The function may be implemented by hardware, or may be implemented by software or hardware executing corresponding software. The hardware or the software includes one or more modules corresponding to the function.

In a possible implementation, the device status detection apparatus 3600 may include an obtaining module 3610 and a processing module 3620. The obtaining module 3610 and the processing module 3620 are coupled to each other.

In some examples, the obtaining module 3610 may be configured to support the electronic device in the foregoing embodiment in obtaining the capacitance information of the touch panel and the like.

The processing module 3620 is configured to support the electronic device in performing processing in the foregoing method embodiment, for example, determining, based on the capacitance information of the touch panel, whether a first event, a second event, or the like is detected.

Optionally, the device status detection apparatus 3600 may further include a storage unit 3630, configured to store program code and data of the device status detection apparatus 3600.

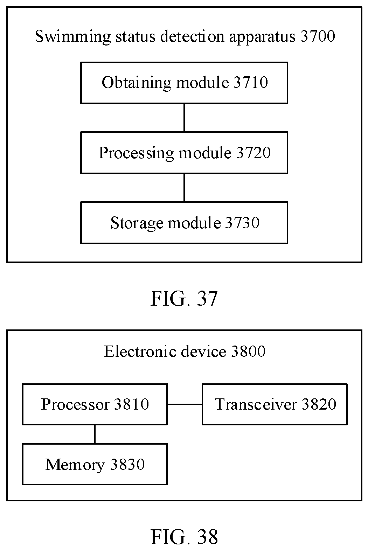

FIG. 37 shows a swimming status detection apparatus 3700 according to an embodiment of this application. The apparatus 3700 may have the function of the electronic device configured to detect a swimming status of a user in the foregoing method embodiment, and may be configured to perform steps performed by the function of the electronic device in the foregoing method embodiment. The function may be implemented by hardware, or may be implemented by software or hardware executing corresponding software. The hardware or the software includes one or more modules corresponding to the function.

In a possible implementation, the swimming status detection apparatus 3700 may include an obtaining module 3710 and a processing module 3720. The obtaining module 3710 and the processing module 3720 are coupled to each other.

In some examples, the obtaining module 3710 may be configured to support the electronic device in obtaining a user input in the foregoing embodiment, for example, obtaining an operation of selecting a lane length by the user.

The processing module 3720 is configured to support the electronic device in performing processing in the foregoing method embodiment, for example, determining a threshold of a minimum count of strokes based on the lane length.

Optionally, the swimming status detection apparatus 3700 may further include a storage unit 3730, configured to store program code and data of the swimming status detection apparatus 3700.

FIG. 38 is an electronic device 3800 according to an embodiment of this application. As shown in the figure, the electronic device 3800 includes at least one processor 3810 and a transceiver 3820. The processor 3810 is coupled to a memory, and is configured to execute instructions stored in the memory, to control the transceiver 3820 to send a signal and/or receive a signal.

Optionally, the electronic device 3800 further includes a memory 3830, configured to store instructions.

In some embodiments, the processor 3810 and the memory 3830 may be integrated into one processing apparatus, and the processor 3810 is configured to execute program code stored in the memory 3830 to implement the foregoing functions. During specific implementation, the memory 3830 may alternatively be integrated into the processor 3810, or may be independent of the processor 3810.

In some embodiments, the transceiver 3820 may include a receiver (or referred to as a receive machine) and a transmitter (or referred to as a transmit machine).

The transceiver 3820 may further include an antenna. There may be one or more antennas. The transceiver 3820 may be a communication interface or an interface circuit.

When the electronic device 3800 is a chip, the chip includes a transceiver module and a processing module. The transceiver module may be an input/output circuit or a communication interface. The processing module may be a processor, a microprocessor, or an integrated circuit integrated on the chip.

This embodiment further provides a computer-readable storage medium. The computer-readable storage medium stores computer instructions. When the computer instructions are run on an electronic device, the electronic device performs the foregoing related method steps to implement the device status detection method or the swimming status detection method in the foregoing embodiment.

This embodiment further provides a computer program product. When the computer program product runs on a computer, the computer performs the foregoing related steps, to implement the device status detection method or the swimming status detection method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the device status detection method or the swimming status detection method in the foregoing method embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device status detection method, applied to an electronic device, wherein the electronic device comprises a touch panel, the touch panel comprises M sites, and the method comprises:
obtaining capacitance information of the touch panel, wherein the capacitance information comprises one or more of the following: capacitance values of the M sites, and a relationship between the capacitance values of the M sites and time or a relationship between the capacitance values of the M sites and positions of the M sites; and
when a first event and a second event are detected, determining that the electronic device is in a target state, wherein the target state comprises that the electronic device is at least partially immersed in conductive liquid, wherein
the first event comprises that capacitance values of at least N of the M sites are greater than or equal to a first threshold, N≤M, and both N and M are positive integers; and
the second event comprises one or more of the following:
a duration of the first event is greater than or equal to a first duration; and
capacitance value variations of at least P of the N sites within a second duration are greater than or equal to a second threshold; or
the N sites are consecutively distributed, P≤N, and P is a positive integer.

2. The method according to claim 1, wherein the method further comprises:
detecting a third event when the electronic device is in the target state; and
when the third event is detected, determining that the electronic device is not in the target state, wherein
the third event comprises at least one of the following:
capacitance values of at least Q of the M sites are less than or equal to a third threshold, Q≤M, and Q is a positive integer; or
capacitance value variations of at least R of the N sites within the second duration are greater than or equal to a fourth threshold, R≤N, and R is a positive integer.

3. The method according to claim 1 or 2, wherein the method further comprises:
when an automatic power-off function of the touch panel is enabled, in response to detecting the first event, powering off the touch panel after a third duration, wherein the third duration is greater than or equal to the first duration.

4. The method according to any one of claims 1 to 3, wherein the electronic device further comprises a barometer and/or an electrocardiogram electrode, and the method further comprises:
when the touch panel is powered off, powering on the touch panel in response to the barometer and/or the electrocardiogram electrode indicating that the electronic device is in the target state.

5. The method according to any one of claims 1 to 4, wherein the electronic device further comprises a sensor, the sensor comprises one or more of the following: an accelerometer, a gyroscope, a magnetometer, an electrocardiogram electrode, or a barometer, and the method further comprises:
determining, in response to a capacitance value exception of the M sites and with reference to information about the sensor, whether the electronic device is in the target state.

6. A swimming status detection method, applied to an electronic device, wherein the electronic device comprises a touch panel, and the method comprises:
obtaining capacitance information of the touch panel; and
determining, based on the capacitance information, one or more of the following: a swimming posture, whether a user is in a swimming state, stroke count information, or lap count information, wherein
the capacitance information comprises one or more of the following: a capacitance value of the touch panel, a relationship between the capacitance value of the touch panel and time, or a distribution of the capacitance value of the touch panel.

7. The method according to claim 6, wherein determining, based on the capacitance information, the one or more of the following: a swimming posture, whether a user is in a swimming state, stroke count information, or lap count information comprises:
determining an immersion state frequency and/or an immersion duration of the electronic device based on the capacitance information; and
when the immersion state frequency within a preset duration is greater than or equal to a first quantity, and/or when the immersion duration within the preset duration is greater than or equal to a first duration, determining, as a valid stroke count, a stroke count recorded by the electronic device within the preset duration.

8. The method according to claim 7, wherein determining the immersion state frequency and/or the immersion duration of the electronic device based on the capacitance information comprises:
determining a valid site based on the capacitance information, wherein a ratio of a capacitance value of the valid site to a maximum capacitance value of a site of the touch panel is greater than or equal to a preset value; and
determining the immersion state frequency and/or the immersion duration based on a quantity of valid sites.

9. The method according to claim 7 or 8, wherein determining, based on the capacitance information, the one or more of the following: a swimming posture, whether a user is in a swimming state, stroke count information, or lap count information comprises:
determining that a current lap is a valid lap when a total immersion duration of a total count of strokes in the current lap is greater than or equal to a second duration, and/or when a count of valid strokes in the current lap is greater than or equal to a second quantity.

10. The method according to any one of claims 6 to 9, wherein determining, based on the capacitance information, the one or more of the following: a swimming posture, whether a user is in a swimming state, stroke count information, or lap count information comprises:
determining a single-time immersion duration of the electronic device based on the capacitance information; and
when the single-time immersion duration is greater than or equal to a third duration, determining that the swimming posture of the user is breaststroke.

11. The method according to any one of claims 6 to 10, wherein the electronic device further comprises an accelerometer and a gyroscope; and
determining, based on the capacitance information, the one or more of the following: a swimming posture, whether a user is in a swimming state, stroke count information, or lap count information comprises:
determining the swimming posture of the user with reference to information about the accelerometer, information about the gyroscope, and the capacitance information.

12. The method according to any one of claims 6 to 11, wherein the electronic device further comprises a barometer; and
determining, based on the capacitance information, the one or more of the following: a swimming posture, whether a user is in a swimming state, stroke count information, or lap count information comprises:
determining, with reference to information about the barometer and the capacitance information, whether the user is in the swimming state.

13. The method according to claim 12, wherein determining, with reference to the information about the barometer and the capacitance information, whether the user is in the swimming state comprises:
determining that the user is in the swimming state when the barometer indicates that the electronic device is in an immersion state, and the capacitance information indicates that a count of strokes with a valid swimming posture in M valid strokes is greater than or equal to N, wherein N≤M, and N and M are positive integers; or
determining that the user is in the swimming state when the barometer indicates that the electronic device is in an out-of-water state, and the capacitance information indicates that the immersion duration of the electronic device is greater than or equal to a fourth duration, and that a count of strokes with a valid swimming posture in latest P strokes is greater than or equal to Q, wherein Q≤P, and Q and P are positive integers.

14. The method according to claim 12 or 13, wherein determining, with reference to the information about the barometer and the capacitance information, whether the user is in the swimming state comprises:
determining that the user is in the immersion state without swimming when the barometer indicates that the electronic device is in the immersion state, and the capacitance information indicates that the count of strokes with the valid swimming posture in the M valid strokes is less than N, wherein N≤M, and N and M are positive integers.

15. The method according to any one of claims 12 to 14, wherein determining, with reference to the information about the barometer and the capacitance information, whether the user is in the swimming state comprises:
determining that the user is in the out-of-water state when the barometer indicates that the electronic device is in the out-of-water state, and the touch panel indicates that the immersion duration of the electronic device is less than the fourth duration and/or that the count of strokes with the valid swimming posture in the latest P strokes is less than Q, wherein Q≤P, and Q and P are positive integers.

16. A swimming status detection method, applied to an electronic device, wherein the electronic device comprises a touch panel, and the method comprises:
displaying prompt information in response to a swimming start operation, wherein the prompt information indicates to enable the touch panel to detect a swimming status; and
obtaining capacitance information of the touch panel in response to a confirmation operation, wherein
the capacitance information comprises one or more of the following: a capacitance value of the touch panel, a relationship between the capacitance value of the touch panel and time, or a distribution of the capacitance value of the touch panel.

17. An electronic device, comprising a processor and a memory, wherein the memory is configured to store program instructions, and the processor is configured to invoke the program instructions to perform the method according to any one of claims 1 to 6 or claims 7 to 15, or the method according to claim 16.

18. A device status detection apparatus, comprising a module configured to implement the method according to any one of claims 1 to 6 or claims 7 to 12.

19. A swimming status detection apparatus, comprising a module configured to implement the method according to any one of claims 7 to 15 or the method according to claim 16.

20. A computer-readable storage medium, wherein the computer-readable storage medium stores a computer program; and when the computer program is executed by a computer, the method according to any one of claims 1 to 6 or claims 7 to 15, or the method according to claim 16 is implemented.

21. A chip, comprising a processor and a memory, wherein the processor is configured to read instructions stored in the memory, and when the processor executes the instructions, the chip is enabled to implement the method according to any one of claims 1 to 6 or claims 7 to 15, or the method according to claim 16.
